# FASCICULE DE BREVET EUROPEEN

(11) **EP 4 523 171 B1**
(45) Date de publication et mention de la délivrance du brevet: **25.11.2026**
(21) Numéro de dépôt: 23724875.2
(22) Date de dépôt: 12.05.2023
(51) Int. Cl.: G06T 5/00, G06T 5/50

(54) **PROCÉDÉ DE CORRECTION GLOBALE D' UNE IMAGE, ET SYSTÈME ASSOCIÉ**
VERFAHREN ZUR VOLLSTÄNDIGEN KORREKTUR EINES BILDES UND ZUGEHÖRIGES SYSTEM
METHOD FOR THE FULL CORRECTION OF AN IMAGE, AND ASSOCIATED SYSTEM

(30) Priorité: 13.05.2022 FR 2204555
(43) Date de publication de la demande: 19.03.2025
(73) Titulaire: Fogale Nanotech, 30900 Nîmes (FR)
(72) Inventeur: LEGROS, Eric, 30900 NÎMES (FR); PETITGRAND, Sylvain, 30132 CAISSARGUES (FR)
(74) Mandataire: IPAZ
(86) Numéro de dépôt international: PCT/EP2023/062842
(87) Numéro de publication internationale: WO 2023/218072

(56) Documents cités:
- LEVIN ANAT ET AL: "Image and depth from a conventional camera with a coded aperture", COMPUTER SUPPORTED COOPERATIVE WORK, ACM, 2 PENN PLAZA, SUITE 701 NEW YORK NY 10121-0701 USA, 29 July 2007 (2007-07-29), pages 70 - es, XP058594779, ISBN: 978-1-60558-007-4, DOI: 10.1145/1275808.1276464
- FELIX HEIDE ET AL: "FlexISP", ACM TRANSACTIONS ON GRAPHICS, ACM, NY, US, vol. 33, no. 6, 19 November 2014 (2014-11-19), pages 1 - 13, XP058060843, ISSN: 0730-0301, DOI: 10.1145/2661229.2661260
- FARSIU S. ET AL: "Multiframe demosaicing and super-resolution of color images", IEEE TRANSACTIONS ON IMAGE PROCESSING, vol. 15, no. 1, 1 January 2006 (2006-01-01), USA, pages 141 - 159, XP093007731, ISSN: 1057-7149, DOI: 10.1109/TIP.2005.860336
- YANG QI ET AL: "Example-based image super-resolution via blur kernel estimation and variational reconstruction", vol. 117, 1 January 2019 (2019-01-01), NL, pages 83 - 89, XP093007735, ISSN: 0167-8655, Retrieved from the Internet <URL:https://www.sciencedirect.com/science/article/pii/S016786551830919X/pdfft?md5=86150668aac2db9b2f5a7c753bacf057&pid=1-s2.0-S016786551830919X-main.pdf> DOI: 10.1016/j.patrec.2018.12.008
- "Templates for the Solution of Linear Systems: Building Blocks for Iterative Methods", 1 January 1994 (1994-01-01), XP093007749, ISBN: 978-1-61197-153-8, Retrieved from the Internet <URL:https://netlib.org/templates/templates.pdf>

## Description

### Domaine technique

La présente invention concerne procédé de correction d'une image. Elle concerne aussi un système pour la mise en œuvre d'un tel procédé.

Un tel dispositif permet à un utilisateur de corriger de manière globale plusieurs défauts d'une image. Le domaine de l'invention est plus particulièrement, mais de manière non limitative, celui des appareils photographiques ou des caméras numériques pour téléphone, tablette ou ordinateur portable.

### Etat de la technique antérieure

Pour des raisons de simplicité optique, dans les modules caméras des téléphones intelligents (ou « smartphones » en anglais) en particulier, mais pas seulement, la séparation des couleurs se fait par des capteurs dit à filtre de Bayer, ou matrice de filtrage de couleur (ou « Color Filter Array » en anglais ou CFA). En effet, cette technique à l'énorme avantage de permettre de capter plusieurs bandes de couleur à travers une optique de focalisation unique, éclairant un même plan image, donc les images R, V, B (Rouge, Vert, Bleu) sont nécessairement alignées entre elles. (Ce constat est faisable macroscopiquement, mais à l'échelle des photosites (c'est-à-dire photodiodes) de détection, il y a quand même un micro-décalage à cause du pas de la position des photosites différents entre les différents canaux de couleurs.) Une cellule élémentaire d'un tel capteur peut contenir par exemple 2 x 2 photosites, Rouge, Vert1, Vert2, Bleu, ou encore 4x4 photosites, dont 1 groupe de 2x2 rouges, 2 groupes de 2x2 verts, un groupe de 2x 2 bleus.

Ces techniques de CFA ont l'inconvénient que les couleurs obtenues ne le sont pas en tous les points de l'espace où se trouve un photosite du capteur, puisqu'à l'endroit du par exemple photosite rouge, ni le vert, ni le bleu ne sont détectés. On dit que l'image brute ainsi obtenue est « mosaïquée », à l'image d'une mosaïque de carreaux de différentes couleurs représentant une image plus globalement, qui apparaitra de façon d'autant plus homogène que les carreaux sont petits ou vus de loin. Afin d'obtenir l'image finale, à défaut de perdre délibérément en résolution en regroupant l'ensemble des informations de couleur d'une cellule élémentaire en ne créant dans l'image restituée qu'un seul pixel ayant 3 intensités de couleur dans les 3 canaux R, V, B, il convient de restituer les couleurs manquantes afin d'espérer obtenir une résolution proche de celle des photosites de la cellule élémentaire, c'est-à-dire de s'abstraire de la mosaïque de l'image brute. En particulier, il est fréquent d'observer des franges colorées de part et d'autre d'un objet photographié, par exemple rouges d'un côté, bleues de l'autre. Ces franges sont encore plus visibles quand on réalise un zoom numérique sur l'image. Il existe aussi des effets de restitution de fausses couleurs à l'intérieur de la texture d'un objet, dans cet art antérieur. Ces effets apparaissent en particulier quand l'objet comporte des sauts de luminosité qui peuvent générer à tort des mauvaises interpolations de couleurs par les algorithmes dit de démosaïcage de l'état de l'art.

Dans l'art antérieur, nous connaissons aussi les capteurs à technologie Foveon, où les différents canaux de couleurs sont détectés par absorption spécifique dans plusieurs photodiodes empilées, la photodiode rencontrée en premier absorbant et détectant par exemple le bleu, puis une suivante absorbant et détectant le vert, et enfin le rouge qui reste dans le flux lumineux est détecté dans les couches plus profondes. De la sorte, le capteur restitue 3 pixels de couleurs à des positions identiques, évitant d'avoir à démosaïquer l'image, puisque les pixels restituent une information de couleur à des endroits identiques.

De plus, malgré l'empilement de plusieurs lentilles de matériaux différents dans les objectifs de focalisation de la lumière dans les modules caméra, par exemple de smartphones même haut de gamme, il n'est pas toujours complètement possible de supprimer des effets de focalisation des couleurs à des distances différentes entre elles, et en particulier sur tout le champ de vue de l'objectif. Ces défauts sont appelés aberrations de chromaticité. Et quand bien même cela serait possible en théorie de concevoir un tel objectif 'parfait', la réalisation pratique de ces objectifs comporte un certain nombre d'écarts aux valeurs idéales de la conception, qui in fine se traduisent par des défauts de focalisation, qui varient de part en part de l'image, induisant un étalement de la tache de lumière au lieu de l'obtention d'un unique point, et de plus qui est différent selon les position sur le champ du capteur, et cela aussi en dépendance à la longueur d'onde. Il en résulte aussi des déformations géométriques, rendant l'image obtenue différente d'une homothétie parfaite par rapport à la scène observée, ce qu'on appelle des distorsions optiques, que l'on peut rassembler avec les effets de flou par étalement de la lumière sous le vocable aberration optiques. Il s'en suit mathématiquement des modifications d'angles entre des lignes d'un l'objet et la réalité, et des torsions de ces lignes, connues par exemple sous le nom de distorsion en 'tonneau', ou en 'coussin' pour le mode principal de ces distorsions, selon qu'elles compriment les coins vers le centre de l'image, ou au contraire qu'elles les écartent vers l'extérieur.

Encore, quand la luminosité est plus faible qu'un certain seuil, le rapport du signal à bruit des pixels peut se dégrader significativement conduisant soit à vouloir exposer plus longtemps les pixels, mais au détriment des zones plus éclairées de l'image, ou au risque d'obtenir un flou de bouger lors de la prise de vue. Le traitement de l'image doit, selon les conditions, faire en sorte de réduire ce bruit, qui peut se manifester en particulier par l'apparition parasite de points des 3 couleurs R, V, B, aléatoirement dans la texture des objets, sans traitement particulier, en plus d'un bruit spatial de luminosité.

Aussi, on connait des façons de réduire le bruit d'une image à partir d'une hypothèse d'homogénéité spatiale : Il peut s'agir de remplacer l'intensité d'un point par celle issue en plus de ses voisins, dans une opération de moyenne. C'est une opération que l'on peut qualifier de lissage spatial. Mais plus le bruit est élevé, plus cette technique conduit à réduire la résolution spatiale de l'image, donc à la rendre floue.

L'ensemble de ces défauts produit à la fin des erreurs de restitution dans les images, perceptibles par l'utilisateur des modules caméras d'un smartphone par exemple. De même, pour un module caméra qui serait utilisé par exemple pour la conduite automatique automobile, ces défauts peuvent entraver la reconnaissance d'objets sur la scène observée.

L'art antérieur de restitution des images consiste aussi généralement à deviner les photosites qui manquent spatialement dans la matrice des couleurs des CFA, par des lois qui prennent en compte les photosites adjacents, soit de même couleur, soit d'une autre couleur par une hypothèse sous-jacente que la luminosité obtenue des photosites R, V, B locaux serait représentative de la couleur non détectée localement, ou d'autres méthodes encore tendant à minimiser les artéfacts les plus connus tels que l'apparition de fausses couleurs autour des objets, ou sur des zones à forte variation, et des effets dit de 'fermeture éclair' de par les restitutions erronées de fausses alternances périodiques de couleur ou de luminosité, généralement sur des contours, rappelant l'image d'un tel objet, d'où le nom de l'artéfact.

Aussi, il peut apparaitre sur le bord des objets des effets de crénelage liés à la limite de pixelisation (ou discrétisation) de l'image, généralement sur des contours non parallèles aux axes de périodicité du capteur, donc tout ce qui n'est à pas à des angles multiples de 45° ou 90° par exemple pour des géométries standards de capteurs à CFA.

L'ensemble de ces deux méthodes de réduction de bruit et de démosaïcage conduit à obtenir des images en deçà de la limite de résolution des photosites, ce qui dégrade la netteté possible de détection, en plus des artéfacts précédemment cités. Généralement, une image ainsi prétraitée subit ensuite des corrections de distorsion (ou aberrations géométriques) pour restituer une relation d'homothétie entre un plan particulier de la scène et l'image qu'elle produit. Elle peut subir aussi des corrections d'aberrations chromatiques.

En plus, à la fin de ces procédés de l'art antérieur de correction d'image, comme les traitements de réduction du bruit ont produit un flou supplémentaire sur l'image, en addition aux défauts de flou dus à une focalisation pas forcément parfaite en tous les points du champ de vue comme déjà évoqué, il est procédé à une étape de rehaussement qui revient à remplacer l'intensité d'un point de l'image par une convolution avec une matrice de coefficients pour produire un rehaussement des composantes de haute fréquence spatiale, afin de restituer une certaine netteté perdue par l'ensemble du procédé de traitement, ainsi que par la focalisation optique elle-même, imparfaite.

L'on connait aussi des défauts de flou induits par un mouvement relatif du module camera par rapport à la scène observée. Généralement, des systèmes de compensation par mouvements opposés à ceux de l'appareil qui contient le module caméra sont produits volontairement pour stabiliser l'image. Toutefois, ne serait-ce que pour des questions d'inertie mécanique, il se peut qu'il reste un écart entre la position idéale qu'il aurait fallu générer et celle réellement obtenue. Cet écart par rapport à la trajectoire idéale va produire un étalement des points, dans par exemple une direction particulière, ou selon un diagramme plus diffus selon le temps de prise de vue par exemple. Il existe des méthodes de compensation mises en œuvre dans des logiciels de post correction de ces micro-défauts, par recherche de ce qu'ils induisent, et compensation au niveau de l'image.
« Image and depth from a conventional camera with coded aperture » de Anat LEVIN et al., ACM transactions on graphics, vol.26, No3, juillet 2007, décrit une modification d'un appareil photo conventionnel permettant la récupération simultanée (a) d'informations d'image haute résolution et (b) d'informations de profondeur permettant l'extraction semi-automatique d'une représentation en profondeur par couches de l'image.
« FlexISP : A Felxible Camera Image Processing Framework » de Felix HEIDE et al., ACM transactions on graphics, vol.33, No6, novembre 2014, décrit un système de bout en bout qui prend en compte la caméra et le modèle d'image, et prend en compte conjointement les étapes courantes de traitement d'images comme le dématriçage, le débruitage, la déconvolution, etc., le tout dans une représentation de sortie donnée (par exemple, YUV, DCT).
« Multiframe Demosaicing and super-resolution of color images » de Sina FARSIU et al., IEEE Transactions on image processing, vol.15, No1, Janvier 2006, décrit un procédé hybride de super-résolution et de dématriçage.
« Example-based image super-resolution via blur kernel estimation and variational reconstruction » de Qi YANG et al., Pattern recognition letters 117, pages 83-89, décrit une méthode de super-résolution d'image, basée sur des exemples, permettant d'obtenir une image nette.
« Templates for the solution of linear systems : building blocks for iterative methods » de Richard BARRET et al., décrit une méthode des gradients conjugués de sa page 12 à sa page 15.

Le but de la présente invention est de proposer un procédé de correction d'une image :
- permettant de corriger simultanément (c'est-à-dire pas l'un après l'autres) deux types différents de défauts, et/ou
- plus rapide que l'état de l'art, et/ou
- permettant d'obtenir une résolution de l'image corrigée de préférence égale ou même inférieure à celle de la limite de résolution des photosites.

### Exposé de l'invention

Cet objectif est atteint avec un procédé de correction d'au moins une image d'entrée Iₑ en une image en cours de restitution I_{Rk} puis une image **restituée** I_{R} , l'au moins une image d'entrée étant issue d'au moins un capteur optique muni de photosites de différentes couleurs et étant obtenue à travers au moins un système d'imagerie optique (aussi appelé par la suite au moins un système d'imagerie ou au moins un système optique), chaque capteur étant associé à un système d'imagerie optique, ledit procédé comprenant :
- une réception de l'au moins une image d'entrée Iₑ,
- une modification itérative de l'image I_{Rk} en cours de restitution à différentes itérations k, par traitement itératif d'une fonction E comprenant deux termes dont :
   ∘ un premier terme D qui dépend d'une comparaison entre d'une part l'au moins une image d'entrée Iₑ et d'autre part un résultat I_{ck} de l'image I_{Rk} en cours de restitution à l'itération k retraitée par des informations relatives à l'au moins un système d'imagerie, le premier terme D dépendant de différence(s) entre d'une part l'au moins une image d'entrée Iₑ et d'autre part le résultat I_{ck} d'une modification de l'image I_{Rk} en cours de restitution à l'itération k au moins par une fonction décrivant la réponse de l'au moins un système d'imagerie, la fonction décrivant la réponse de l'au moins un système d'imagerie dépendant d'une distance (Z) entre l'au moins un capteur et un objet imagé par l'au moins un capteur, et/ou d'une distance (zₒₛ) entre une partie de l'au moins un système d'imagerie et un objet imagé par l'au moins un capteur, et
   o un second terme P qui dépend d'anomalie(s) ou pénalité(s) ou défaut(s) au sein de l'image I_{Rk} en cours de restitution à l'itération k,
jusqu'à minimiser, au moins en dessous d'un certain seuil de minimisation ou à partir d'un certain nombre d'itérations, un effet cumulé :
∘ de différence(s) du premier terme D entre l'au moins une image d'entrée Iₑ et le résultat I_{ck}, et
o d'anomalie(s) ou pénalité(s) ou défaut(s) dont dépend le second terme P au sein de l'image I_{Rk} en cours de restitution à l'itération k
   de sorte que l'image restituée I_{R} corresponde à l'image en cours de restitution à l'itération pour laquelle cette minimisation est obtenue.

Ainsi, par une telle itération et minimisation, le procédé selon l'invention peut corriger de manière simultanée au moins deux des types de défauts suivants de l'au moins une image d'entrée parmi :
- Aberration optique, géométrique et/ou chromatique, et/ou
- Distorsion, et/ou
- Mosaïcage, et/ou
- Bruit de détection, et/ou
- Flou, et/ou
- Résidu de non compensation d'un mouvement, et/ou
- Artéfacts induits par une discrétisation spatiale.

On évite ainsi les inconvénients des corrections successives de défauts :
- Très consommatrices en temps, et/ou
- Pouvant accentuer ou générer un défaut (par exemple, après un traitement de flou, un traitement de réduction du bruit peut réintroduire un flou sur l'image).

La minimisation de l'effet cumulé peut correspondre à une minimisation de la fonction E.

La fonction E peut comprendre (ou même consister en) la somme du premier terme D et du deuxième terme P.

Le résultat I_{ck} peut comprendre et/ou consister en un produit de convolution de l'image I_{Rk} en cours de restitution à l'itération k par la fonction décrivant la réponse de l'au moins un système d'imagerie, et éventuellement traité par une transformation géométrique TG.

La fonction décrivant la réponse de l'au moins un système d'imagerie peut être une fonction de transfert optique (OTF) de l'au moins un système d'imagerie ou une fonction d'étalement du point (PSF) de l'au moins un système d'imagerie.

La fonction décrivant la réponse de l'au moins un système d'imagerie peut dépendre :
- d'une distance (z_{co}) entre une partie de l'au moins un système d'imagerie et l'au moins un capteur, et/ou
- d'un état de l'au moins un système d'imagerie, tel qu'un réglage de zoom ou focus ou d'ouverture numérique de l'au moins un système d'imagerie, et/ou
- du pixel de l'image en cours de restitution et/ou du photosite de l'au moins un capteur, et/ou
- d'un ou plusieurs angles entre l'au moins un capteur et l'au moins un système d'imagerie.

Le procédé selon l'invention peut comprendre un passage de lumière à travers l'au moins un système optique jusqu'à l'au moins un capteur de manière à générer l'au moins une image d'entrée.

Le procédé selon l'invention peut comprendre un affichage sur un écran de l'image restituée.

En outre, un tel procédé global itératif laisse la possibilité d'obtenir une résolution de l'image corrigée égale ou même inférieure à celle de la limite de résolution des photosites (même si dans certains modes de réalisation la résolution de l'image corrigée peut être supérieure à celle de la limite de résolution des photosites).

L'image restituée peut avoir une résolution supérieure ou égale à celle de la réunion de tous les photosites de toutes les couleurs de l'au moins un capteur.

Le procédé selon l'invention peut comprendre une génération, à partir de plusieurs images d'entrée, d'une version initiale de l'image en cours de restitution I_{Rk} pour la première itération k=1 par une combinaison entre ces plusieurs images d'entrée Iₑ.

Le second terme P peut comprendre au moins une composante P₁ dont l'effet est minimisé pour de faibles écarts d'intensité entre pixels voisins de l'image I_{Rk} en cours de restitution à l'itération k.

Le second terme P peut comprendre au moins une composante P₃ dont l'effet est minimisé pour de faibles écarts de teinte entre pixels voisins de l'image I_{Rk} en cours de restitution à l'itération k.

Le second terme P peut comprendre au moins une composante P₂ dont l'effet est minimisé pour de faibles fréquences de changements de direction entre pixels voisins de l'image I_{Rk} dessinant un contour.

Un autre aspect de l'invention concerne un programme d'ordinateur comprenant des instructions qui, lorsqu'elles sont exécutées par un ordinateur, mettent en oeuvre les étapes du procédé selon l'invention.

Un autre aspect de l'invention concerne un produit programme d'ordinateur comprenant des instructions qui, lorsque le programme est **exécuté** par un ordinateur, font exécuter par l'ordinateur les étapes du procédé selon l'invention.

Un autre aspect de l'invention concerne un support de stockage lisible par ordinateur comprenant des instructions qui, lorsqu'elles sont exécutées par un ordinateur, amènent l'ordinateur à exécuter les étapes du procédé selon l'invention.

Suivant encore un autre aspect de l'invention, il est proposé un dispositif de correction d'au moins une image d'entrée Iₑ en une image en cours de restitution I_{Rk} puis une image restituée I_{R}, l'au moins une image d'entrée étant issue d'au moins un capteur optique muni de photosites de différentes couleurs et étant obtenue à travers au moins un système d'imagerie optique, chaque capteur étant associé à un système d'imagerie optique, ledit dispositif comprenant :
- des moyens pour recevoir l'au moins une image d'entrée Iₑ,
- des moyens de traitement agencés et/ou programmés pour une modification itérative de l'image I_{Rk} en cours de restitution à différentes itérations k, par traitement itératif d'une fonction E comprenant deux termes dont :
   o un premier terme D qui dépend d'une comparaison entre d'une part l'au moins une image d'entrée Iₑ et d'autre part un résultat I_{ck} de l'image I_{Rk} en cours de restitution à l'itération k retraitée par des informations relatives à l'au moins un système d'imagerie, le premier terme D dépendant de différence(s) entre d'une part l'au moins une image d'entrée Iₑ et d'autre part le résultat I_{ck} d'une modification de l'image I_{Rk} en cours de restitution à l'itération k au moins par une fonction décrivant la réponse de l'au moins un système d'imagerie, la fonction décrivant la réponse de l'au moins un système d'imagerie dépendant d'une distance (Z) entre l'au moins un capteur et un objet imagé par l'au moins un capteur, et/ou d'une distance (zₒₛ) entre une partie de l'au moins un système d'imagerie et un objet imagé par l'au moins un capteur, et
   o un second terme P qui dépend d'anomalie(s) ou pénalité(s) ou défaut(s) au sein de l'image I_{Rk} en cours de restitution à l'itération k,
jusqu'à minimiser, au moins en dessous d'un certain seuil de minimisation ou à partir d'un certain nombre d'itérations, un effet cumulé :
o de différence(s) du premier terme D entre l'au moins une image d'entrée Iₑ et le résultat I_{ck}, et
o d'anomalie(s) ou pénalité(s) ou défaut(s) dont dépend le second terme P au sein de l'image I_{Rk} en cours de restitution à l'itération k
   de sorte que l'image restituée I_{R} corresponde à l'image en cours de restitution à l'itération pour laquelle cette minimisation est obtenue.

Les moyens de traitement peuvent être agencés et/ou programmés pour corriger de manière simultanée au moins deux des types de défauts suivants de l'au moins une image d'entrée parmi :
- Aberration optique, géométrique et/ou chromatique, et/ou
- Distorsion, et/ou
- Mosaïcage, et/ou
- Bruit de détection, et/ou
- Flou, et/ou
- Résidu de non compensation d'un mouvement, et/ou
- Artéfacts induits par une discrétisation spatiale.

La minimisation de l'effet cumulé peut correspondre à une minimisation de la fonction E.

La fonction E peut comprendre (ou même consister en) la somme du premier terme D et du deuxième terme P.

Le résultat I_{ck} peut comprendre et/ou consister en un produit de convolution de l'image I_{Rk} en cours de restitution à l'itération k par la fonction décrivant la réponse de l'au moins un système d'imagerie, et éventuellement traité par une transformation géométrique TG.

La fonction décrivant la réponse de l'au moins un système d'imagerie peut être une fonction de transfert optique (OTF) de l'au moins un système d'imagerie ou une fonction d'étalement du point (PSF) de l'au moins un système d'imagerie.

La fonction décrivant la réponse de l'au moins un système d'imagerie peut dépendre :
- d'une distance (z_{co}) entre une partie de l'au moins un système d'imagerie et l'au moins un capteur, et/ou
- d'un état de l'au moins un système d'imagerie, tel qu'un réglage de zoom ou focus ou d'ouverture numérique de l'au moins un système d'imagerie, et/ou
- du pixel de l'image en cours de restitution et/ou du photosite de l'au moins un capteur, et/ou
- d'un ou plusieurs angles entre l'au moins un capteur et l'au moins un système d'imagerie.

Le dispositif selon l'invention peut comprendre l'au moins un capteur et l'au moins un système optique qui est agencé pour un passage de lumière à travers l'au moins un système optique jusqu'à l'au moins un capteur de manière à générer l'au moins une image d'entrée.

Le dispositif selon l'invention peut comprendre des moyens agencés et/ou programmés pour afficher sur un écran l'image restituée.

L'image restituée peut avoir une résolution supérieure ou égale à celle de la réunion de tous les photosites de toutes les couleurs de l'au moins un capteur.

Les moyens de traitement peuvent être agencés et/ou programmés pour une génération, à partir de plusieurs images d'entrée, d'une version initiale de l'image en cours de restitution I_{Rk} pour la première itération k=1 par une combinaison entre ces plusieurs images d'entrée Iₑ.

Le second terme P peut comprendre au moins une composante P₁ dont l'effet est minimisé pour de faibles écarts d'intensité entre pixels voisins de l'image I_{Rk} en cours de restitution à l'itération k.

Le second terme P peut comprendre au moins une composante P₃ dont l'effet est minimisé pour de faibles écarts de teinte entre pixels voisins de l'image I_{Rk} en cours de restitution à l'itération k.

Le second terme P peut comprendre au moins une composante P₂ dont l'effet est minimisé pour de faibles fréquences de changements de direction entre pixels voisins de l'image I_{Rk} dessinant un contour.

Suivant encore un autre aspect de l'invention, il est proposé :
- un smartphone (aussi appelé ordiphone ou téléphone mobile intelligent ou téléphone mobile multifonction), mettant en œuvre un procédé de correction selon l'invention pour corriger une image acquise par le smartphone (plus précisément par le ou les module(s) caméra, comprenant un objectif et un capteur, du smartphone) et/ou comprenant un dispositif de correction selon l'invention agencé et/ou programmé pour corriger une image acquise par le smartphone (plus précisément par le ou les module(s) caméra, comprenant un objectif et un capteur, du smartphone), et/ou
- une utilisation d'un dispositif de correction selon l'invention et/ou d'un procédé de correction selon l'invention au sein d'un smartphone (aussi appelé ordiphone ou téléphone mobile intelligent ou téléphone mobile multifonction), pour corriger une image acquise par le smartphone (plus précisément par le ou les module(s) caméra, comprenant un objectif et un capteur, du smartphone), et/ou
- une tablette tactile, mettant en œuvre un procédé de correction selon l'invention pour corriger une image acquise par la tablette tactile (plus précisément par le ou les module(s) caméra, comprenant un objectif et un capteur, de la tablette tactile) et/ou comprenant un dispositif de correction selon l'invention agencé et/ou programmé pour corriger une image acquise par la tablette tactile (plus précisément par le ou les module(s) caméra, comprenant un objectif et un capteur, de la tablette tactile), et/ou
- une utilisation d'un dispositif de correction selon l'invention et/ou d'un procédé de correction selon l'invention au sein d'une tablette tactile, pour corriger une image acquise par la tablette tactile (plus précisément par le ou les module(s) caméra, comprenant un objectif et un capteur, de la tablette tactile), et/ou
- un appareil photographique (de préférence de type reflex ou bridge ou compact), mettant en œuvre un procédé de correction selon l'invention pour corriger une image acquise par l'appareil photographique (plus précisément par le ou les module(s) caméra, comprenant un objectif et un capteur, de l'appareil photographique) et/ou comprenant un dispositif de correction selon l'invention agencé et/ou programmé pour corriger une image acquise par l'appareil photographique (plus précisément par le ou les module(s) caméra, comprenant un objectif et un capteur, de l'appareil photographique),
- une utilisation d'un dispositif de correction selon l'invention et/ou d'un procédé de correction selon l'invention au sein d'un appareil photographique (de préférence de type reflex ou bridge ou compact), pour corriger une image acquise par l'appareil photographique (plus précisément par le ou les module(s) caméra, comprenant un objectif et un capteur, de l'appareil photographique), et/ou
- un véhicule (de préférence automobile, mais pouvant être quelconque), mettant en œuvre un procédé de correction selon l'invention pour corriger une image acquise par le véhicule (plus précisément par le ou les module(s) caméra, comprenant un objectif et un capteur, du véhicule) et/ou comprenant un dispositif de correction selon l'invention agencé et/ou programmé pour corriger une image acquise par le véhicule (plus précisément par le ou les module(s) caméra, comprenant un objectif et un capteur, du véhicule) ; l'image corrigée étant de préférence utilisée ou destinée à être utilisée par le véhicule pour un pilotage autonome du véhicule, et/ou
- une utilisation d'un dispositif de correction selon l'invention et/ou d'un procédé de correction selon l'invention au sein d'un véhicule (de préférence automobile, mais pouvant être quelconque), pour corriger une image acquise par le véhicule (plus précisément par le ou les module(s) caméra, comprenant un objectif et un capteur, du véhicule) ; l'image corrigée étant de préférence utilisée ou destinée à être utilisée par le véhicule pour un pilotage autonome du véhicule, et/ou
- un système de vidéosurveillance (de préférence d'un bâtiment et/ou d'une zone géographique), mettant en œuvre un procédé de correction selon l'invention pour corriger une image acquise par le système de vidéosurveillance (plus précisément par le ou les module(s) caméra, comprenant un objectif et un capteur, du système de vidéosurveillance) et/ou comprenant un dispositif de correction selon l'invention agencé et/ou programmé pour corriger une image acquise par le système de vidéosurveillance **(plus précisément** par le ou les module(s) caméra, comprenant un objectif et un capteur, du système de vidéosurveillance) , et/ou
- une utilisation d'un dispositif de correction selon l'invention et/ou d'un procédé de correction selon l'invention au sein d'un système de vidéosurveillance (de préférence d'un bâtiment et/ou d'une zone géographique), pour corriger une image acquise par le système de vidéosurveillance (plus précisément par le ou les module(s) caméra, comprenant un objectif et un capteur, du système de vidéosurveillance), et/ou
- un drone, mettant en œuvre un procédé de correction selon l'invention pour corriger une image acquise par le drone (plus précisément par le ou les module(s) caméra, comprenant un objectif et un capteur, du drone) et/ou comprenant un dispositif de correction selon l'invention agencé et/ou programmé pour corriger une image acquise par le drone (plus précisément par le ou les module(s) caméra, comprenant un objectif et un capteur, du drone) ; l'image corrigée étant de préférence utilisée ou destinée à être utilisée par le drone :
   o dans le domaine de l'agriculture, l'image acquise par le drone étant de préférence une image de cultures végétales, et/ou
   o dans le domaine de l'analyse de pollution et/ou de l'occupation des sols, l'image acquise par le drone étant de préférence une image à plusieurs bandes de longueur d'onde, et/ou
- une utilisation d'un dispositif de correction selon l'invention et/ou d'un procédé de correction selon l'invention au sein d'un drone, pour corriger une image acquise par le drone (plus précisément par le ou les module(s) caméra, comprenant un objectif et un capteur, du drone) ; l'image corrigée étant de préférence utilisée ou destinée à être utilisée par le drone :
   o dans le domaine de l'agriculture, l'image acquise par le drone étant de préférence une image de cultures végétales, et/ou
   o dans le domaine de l'analyse de pollution et/ou de l'occupation des sols, l'image acquise par le drone étant de **préférence** une image à plusieurs bandes de longueur d'onde, et/ou
- un satellite, mettant en œuvre un procédé de correction selon l'invention pour corriger une image acquise par le satellite (plus précisément par le ou les module(s) caméra, comprenant un objectif et un capteur, du satellite) et/ou comprenant un dispositif de correction selon l'invention agencé et/ou programmé pour corriger une image acquise par le satellite (plus précisément par le ou les module(s) caméra, comprenant un objectif et un capteur, du satellite) ; l'image corrigée étant de préférence utilisée ou destinée à être utilisée par le satellite :
   o dans le domaine de l'agriculture, l'image acquise par le satellite étant de préférence une image de cultures végétales, et/ou
   o dans le domaine de l'analyse de pollution et/ou de l'occupation des sols, l'image acquise par le satellite étant de préférence une image à plusieurs bandes de longueur d'onde, et/ou
- une utilisation d'un dispositif de correction selon l'invention et/ou d'un procédé de correction selon l'invention au sein d'un satellite, pour corriger une image acquise par le satellite (plus précisément par le ou les module(s) caméra, comprenant un objectif et un capteur, du satellite) ; l'image corrigée étant de préférence utilisée ou destinée à être utilisée par le satellite :
   o dans le domaine de l'agriculture, l'image acquise par le satellite étant de préférence une image de cultures végétales, et/ou
   o dans le domaine de l'analyse de pollution et/ou de l'occupation des sols, l'image acquise par le satellite étant de préférence une image à plusieurs bandes de longueur d'onde, et/ou
- un appareil d'imagerie médicale du corps humain et/ou animal (de préférence par Imagerie par résonance magnétique et/ou par rayon X et/ou par rayons Gamma et/ou par ultrasons), mettant en œuvre un procédé de correction selon l'invention pour corriger une image acquise par l'appareil d'imagerie médicale et/ou comprenant un dispositif de correction selon l'invention agencé et/ou programmé pour corriger une image acquise par l'appareil d'imagerie médicale, et/ou
- une utilisation d'un dispositif de correction selon l'invention et/ou d'un procédé de correction selon l'invention au sein d'un appareil d'imagerie médicale du corps humain et/ou animal (de préférence par Imagerie par résonance magnétique et/ou par rayon X et/ou par rayons Gamma et/ou par ultrasons), pour corriger une image acquise par l'appareil d'imagerie médicale, et/ou
- un appareil de microscopie, mettant en œuvre un procédé de correction selon l'invention pour corriger une image acquise par l'appareil de microscopie et/ou comprenant un dispositif de correction selon l'invention agencé et/ou programmé pour corriger une image acquise par l'appareil de microscopie, et/ou
- une utilisation d'un dispositif de correction selon l'invention et/ou d'un procédé de correction selon l'invention au sein d'un appareil de microscopie, pour corriger une image acquise par l'appareil de microscopie, et/ou
- un appareil d'imagerie par tomographie d'une image acquise dans plusieurs bandes de longueur d'onde (de préférence dans le domaine de la santé et/ou dans le domaine de l'industrie et/ou dans le domaine de l'agriculture), mettant en œuvre un procédé de correction selon l'invention pour corriger une image acquise par l'appareil d'imagerie par tomographie et/ou comprenant un dispositif de correction selon l'invention agencé et/ou programmé pour corriger une image acquise par l'appareil d'imagerie par tomographie, et/ou
- une utilisation d'un dispositif de correction selon l'invention et/ou d'un procédé de correction selon l'invention au sein d'un appareil d'imagerie par tomographie d'une image acquise dans plusieurs bandes de longueur d'onde (de préférence dans le domaine de la santé et/ou dans le domaine de l'industrie et/ou dans le domaine de l'agriculture), pour corriger une image acquise par l'appareil d'imagerie par tomographie.

### Description des figures et modes de réalisation

D'autres avantages et particularités de l'invention apparaîtront à la lecture de la description détaillée de mises en œuvre et de modes de réalisation nullement limitatifs, et des dessins annexés suivants :
[Fig. 1] la figure 1 illustre différentes étapes 2, 5, 7, 8 d'un mode de réalisation préférentiel de procédé 1 selon l'invention,
[Fig. 2] la figure 2 illustre différentes étapes 2, 5, 7, 8, 11, 12, 13 du mode de réalisation préférentiel de procédé 1 selon l'invention, et
[Fig. 3] la figure 3 illustre une représentation possible des objets pixels dans le procédé 1: un pixel ayant comme propriété trois couleurs R, V, B. Sa position est celle de sa position X,Y représentée par l'indexation pour y accéder, ce qui traduit sa position dans l'image I_{Rk} ou I_{R}.

Ces modes de réalisation étant nullement limitatifs, on pourra notamment considérer des variantes de l'invention ne comprenant qu'une sélection de caractéristiques décrites ou illustrées par la suite isolées des autres caractéristiques décrites ou illustrées (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, et/ou avec seulement une partie des détails structurels si cette partie uniquement est suffisante pour conférer un avantage technique ou à différencier l'invention par rapport à l'état de la technique antérieure.

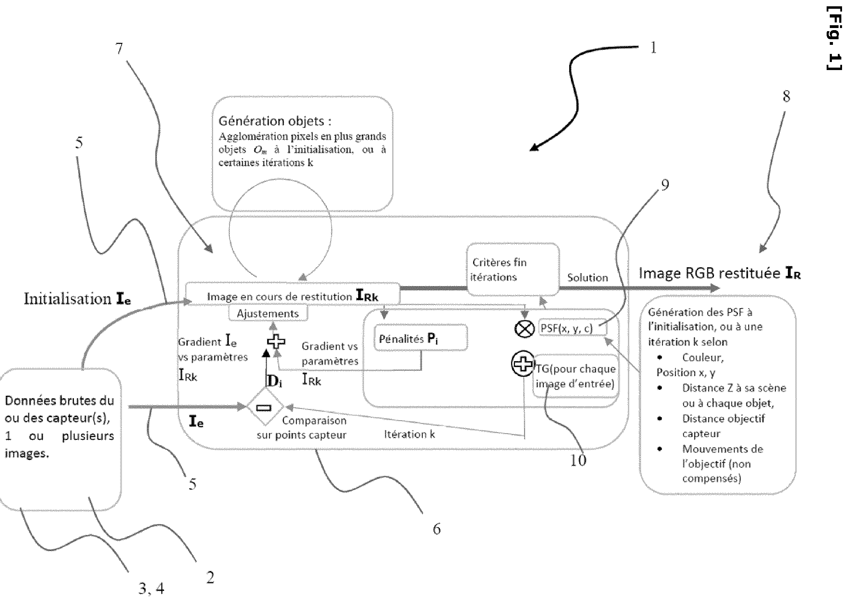

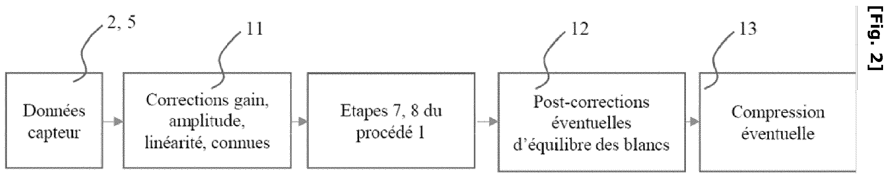

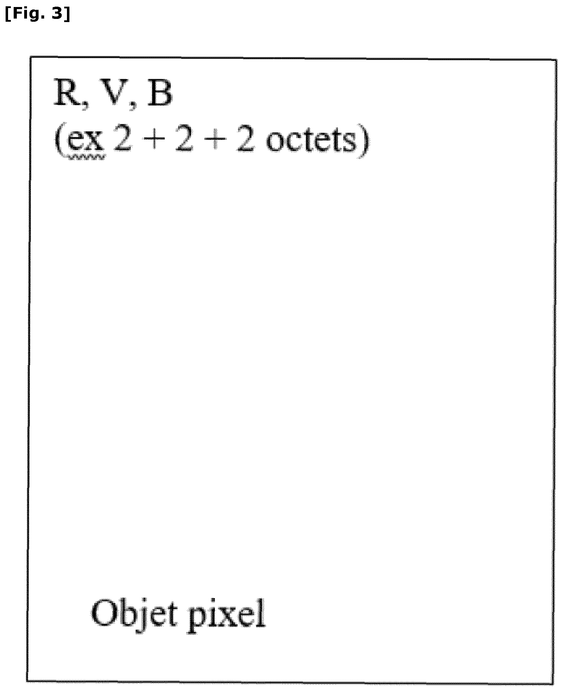

On va tout d'abord décrire, en référence aux figures 1 à 3, les principales étapes un mode de réalisation de procédé 1 de correction selon l'invention, par un mode de réalisation de dispositif selon l'invention comprenant les moyens 6 (et aussi de préférence 3 et 4) décrits ci-après.

Le procédé 1 est un procédé de correction d'au moins une image d'entrée Ie en une image en cours de restitution I_{Rk} puis une image restituée I_{R} .

L'au moins une image d'entrée Iₑ est issue d'une acquisition 2 par au moins un capteur optique 3 muni de photosites de différentes couleurs. Chaque capteur 3, plus précisément chaque photosite de chaque capteur, est agencé pour convertir des photons reçus en un signal électrique. On dit que différents photosites sont de différentes couleurs si ces photosites ont différentes propriétés de transformation de photons en signal électrique en fonction de la longueur d'onde de ces photons. La « couleur » d'un photosite correspond à la longueur d'onde des photons pour lesquels le photosite aura le meilleur ou sensiblement le meilleur taux de transformation de ces photons en énergie électrique. On peut considérer comme exemple de capteur 3 un capteur d'un appareil photo numérique.

L'au moins une image d'entrée Iₑ est obtenue à travers au moins un système d'imagerie optique 4. Chaque système optique 4 peut typiquement être un système comprenant plusieurs lentilles, potentiellement mobiles les unes par rapport aux autres pour un réglage de focus et/ou de zoom, et composant un système optique d'une caméra, d'une webcam, ou d'un appareil photo numérique réflex, bridge, compact, d'un smartphone, d'une tablette, d'un ordinateur portable, etc. Ce système optique peut donc être plus ou moins compact, comprendre plus ou moins de lentilles de différents matériaux possibles (verres, plastiques, etc.) d'indices optiques variés, etc.

On appellera par la suite « module caméra » un ensemble comprenant un capteur 3 et un système d'imagerie 4.

Le capteur 3 ou chacun des capteurs 3 est associé au système d'imagerie optique 4 ou à un des systèmes d'imagerie optique 4. Autrement dit, typiquement, on a un jeu ou système de lentilles 4 devant chaque capteur 3.

Ainsi, le procédé 1 comprend un passage de lumière à travers l'au moins un système optique 4 jusqu'à l'au moins un capteur 3 de manière à générer l'au moins une image d'entrée Iₑ, typiquement une image Iₑ par capteur 3 muni d'un système 4.

Le procédé 1 comprend une réception 5 de l'au moins une image d'entrée Iₑ, par des moyens techniques 6 tels que des moyens techniques de calcul et/ou d'analyse et/ou de traitement 6.

Les moyens 6 comprennent au moins un parmi un ordinateur, une unité centrale ou de calcul, un circuit électronique analogique (de préférence dédié), un circuit électronique numérique (de préférence dédié), et/ou un microprocesseur (de préférence dédié), et/ou des moyens logiciels.

Le procédé 1 comprend en outre une modification itérative 7 (par les moyens techniques 6 qui sont agencés et/ou programmés pour) de l'image I_{Rk} en cours de restitution à différentes itérations numérotées k (k étant un entier **naturel** positif de 1 à N avec N le nombre total d'itérations), par traitement itératif d'une fonction E comprenant deux termes (plus exactement comprenant ou même consistant en la somme du premier terme D et du deuxième terme P) dont :
o un premier terme D qui dépend d'une comparaison entre d'une part l'au moins une image d'entrée Iₑ et d'autre part un résultat I_{ck} de l'image I_{Rk} en cours de restitution à l'itération k retraitée par des informations 9 relatives à l'au moins un système d'imagerie 4, et
o un second terme P qui dépend d'anomalie(s) ou pénalité(s) ou défaut(s) au sein de l'image I_{Rk} en cours de restitution à l'itération k,
jusqu'à minimiser, au moins en dessous d'un certain seuil de minimisation ou à partir d'un certain nombre d'itérations, un effet cumulé (la minimisation de l'effet cumulé correspondant à une minimisation de la fonction E) :
o de différence(s) du premier terme D entre l'au moins une image d'entrée Iₑ et le résultat I_{ck}, et
o d'anomalie(s) ou pénalité(s) ou défaut(s) dont dépend le second terme P au sein de l'image I_{Rk} en cours de restitution à l'itération k
   de sorte que l'image restituée I_{R} (par les moyens 6 lors d'une étape de restitution 8 de l'image restituée) corresponde à l'image en cours de restitution I_{Rk} à l'itération pour laquelle cette minimisation est obtenue.

Cette étape de restitution 8 peut être éventuellement suivie :
- d'une étape 12 de post-correction de l'image I_{R} (équilibre des blancs, etc.) et/ou
- d'une étape de compression 13 de I_{R}

Dans un cas à plusieurs capteurs 3 ou d'un capteur générant plusieurs images Iₑ, les moyens 6 (qui sont agencés et/ou programmés pour) génèrent, à partir de ces plusieurs images d'entrée Iₑ, la version initiale de I_{Rk} pour la première itération k=1 par une combinaison entre ces plusieurs images d'entrée Iₑ, ce qui permet par exemple de fabriquer une image I_{Rk} pour k=1 « panoramique » par combinaison de plusieurs images Iₑ plus petites et en provenance des différents capteurs 3.

Ce procédé 1 est donc mis en œuvre par une boucle de traitement 7 agissant directement entre l'image d'entrée Iₑ (éventuellement corrigées (étape 11) d'offsets et de gain, voire de non linéarités, directement disponibles), et l'image en cours de restitution I_{Rk} qui est générée à partir d'une prise en compte directe d'un maximum d'éléments modélisant précisément la géométrie de toutes les parties de l'au moins un capteur 3, les effets de focalisation optique de part en part de l'au moins un capteur 3, les mouvements éventuels, les effets de distances modifiants les effets de focalisation.

L'au moins une image Iₑ comporte une ou plusieurs images en entrée, prise(s) :
- par le même système caméra(s) 3 & objectif(s) 4, avec une seule image d'entrée, ou plusieurs images, ou
- par plusieurs objectifs 4, tels que ceux, par exemple, d'un smartphone équipé de plusieurs caméras 4, prises à des instants similaires, ou rapprochés.

De façon plus détaillée, le procédé 1 de traitement des images Iₑ s'appuie donc sur les entrées suivantes :
1) l'au moins une image d'entrée Iₑ . Chaque image d'entrée Iₑ utilise ou comprend directement les intensités des photosites R (Rouge), V (Vert), B (Bleu) (ou selon un autre choix possible de matrice de couleur tel que R (Rouge), J (Jaune), W (Blanc ou White), B (Bleu)) du capteur 3 associé à cette image Iₑ , de préférence avant toute opération réduction de bruit par lissage spatial qui n'est plus à faire, ou de tentative de restitution de couleur manquante qui n'est plus à faire non plus (sauf cas particulier). Cette image est dite d'entrée Iₑ. Elle peut tout de même comporter de préférence la prise en compte (étape 11) d'informations de gain et de niveau de noir des photosites, selon par exemple un tableau de valeurs spécifiques au capteur de détection, photosite par photosite, (ou région par région le cas échéant), c'est-à-dire que les intensités détectées par les photosites auront de préférence été corrigés pour avoir le même niveau numérique de restitution du noir, et un niveau de restitution d'un blanc de référence homogénéisé, par exemple uniforme, ou selon un référentiel en accord avec la suite des traitements de correction d'étalement du point. Si la détection s'avérait non linéaire, comprimant par exemple les fortes intensités, le procédé 1 peut faire ces corrections aussi dans cette image dite d'entrée Iₑ, bien que ces calculs puissent aussi être réalisés dans la boucle d'itération 7 si cela présente un intérêt, et cela peut en présenter un si des relations de non linéarité ou saturation sont complexes. Les faire à cette étape permet de ne les faire qu'une seule fois par image et est donc potentiellement avantageux en termes de volume de calculs. Enfin, si des photosites sont réputés non fonctionnels, il conviendra de les exclure des étapes de comparaisons dans les calculs des gradients par rapport à la distance D ou aux distances Di décrites plus loin.
2) une information 9 générée à partir d'une connaissance relativement précise des défauts optiques de focalisation de l'objectif 4 ou de l'au moins un système d'imagerie 4, et de préférence de façon différentiée aussi pour chaque canal de couleur détectée. Cette information peut comporter la lecture d'une table donnant accès à des informations particulières liées aux défauts de réalisation de l'objectif 4 ou de l'au moins un système d'imagerie 4, ainsi que les conditions d'utilisation de l'objectif 4 ou de l'au moins un système d'imagerie 4 tel que la distance entre chaque objectif ou système 4 et la scène observée à travers cet objectif ou système 4, soit considéré selon une unique distance, soit différentiée en distance objet par objet de la scène, et la distance entre l'objectif ou système 4 et le capteur 3 d'imagerie associé à cet objectif ou système 4, et éventuellement des variations d'angle entre ces éléments. De ces informations, il est synthétisé une restitution des fonctions 9 d'étalements de points (dites PSF), que l'on peut matérialiser par des matrices de coefficients aptes à produire par convolution avec les intensités idéalement émises par chaque point de la scène, les intensités obtenues au niveau du capteur d'image 3 ou de l'au moins un capteur 3, pour chaque canal de couleur. Dans le cas où des défauts de déplacements non compensés ou seulement partiellement compensés seraient connus, par exemple par une représentation du mouvement résiduel de non compensation du module caméra par rapport à la scène, on somme les matrices PSF 9 à différentes positions pondérées par le temps qui s'y est écoulé, pour calculer une PSF 9 composite incluant ces mouvements résiduels non compensés, et utiliser cette forme des PSF 9 comme élément d'entrée des itérations de restitution de l'image. Pour obtenir la trajectoire de mouvement d'un capteur 3, il suffit par exemple qu'un capteur d'accélération enregistre les mouvements de l'appareil qui contient le module caméra pendant la prise d'image, et si l'image est mécaniquement stabilisée par rapport aux mouvements de l'appareil comportant le module caméra, il suffirait que le résidu absolu de non stabilisation soit calculé par rapport au capteur d'accélération et au signal de stabilisation. Dans une autre mise en œuvre, en l'absence de données directes de mesure des mouvements, on analyse l'image afin de déterminer le résultat de la trajectoire de déplacement et d'en déduire la composition à appliquer aux PSF pour obtenir la compensation de ce mouvement. De la sorte, l'image restituée I_{R} sera aussi compensée des effets de flou liés aux mouvements résiduels non compensés.
3) Lorsque le système comporte plusieurs images en entrée Iₑ (même module ou séparés), une entité dite transformation géométrique (TG), référencée TG ou 10 dans la présente description et sur les figures, fournit un canal de transformation géométrique de chaque scène pour la faire coïncider spatialement entre les différentes autres images. Cette TG 10 n'est généralement pas linéaire pour prendre en compte des différences de distorsions entre les caméras module s'ils sont plusieurs et que la modélisation des distorsions géométriques n'est pas parfaite, ou que la scène s'est déplacée relativement au(x) module(s) caméra entre les différentes images. Quand il n'y a qu'une image, ou peut considérer la TG comme l'identité. Avec plusieurs images Iₑ en entrée, on peut considérer une des images comme non transformée et calculer la TG pour les autres. Chaque autre TG de chaque image peut être calculée par exemple en cherchant des maxima de corrélation en déplaçant des partie d'une image d'entrée Iₑ par rapport à une autre, disons la première de la série par exemple, et en gardant la translation qui a produit la meilleure corrélation. Cette opération est à répéter sur l'ensemble de plusieurs parties de chaque image, non nécessairement exhaustivement sur toutes les parties de l'image. De préférence, le champ de translations obtenu est interpolé par une méthode d'interpolation par exemple linéaire, ou de préférence cubique, ou toute autre méthode qui permet une telle interpolation. C'est l'ensemble de ces interpolations qui permet d'obtenir une couverture complète du champ de l'image pour obtenir chaque opérateur TG.

La restitution 8 comprend un affichage sur un écran de l'image restituée I_{R}, par des moyens d'affichage faisant partie du mode de réalisation de dispositif selon l'invention.

L'image restituée I_{R} a une résolution supérieure ou égale à celle de la réunion de tous les photosites de toutes les couleurs de l'au moins un capteur 3.

En effet, dans une mise en œuvre préférentielle, le procédé 1 de traitement des images permet de restituer une image I_{R} de résolution au moins aussi élevé que celle réunie des différents photosites des différentes couleurs, ou plus encore, afin entre autre de réduire les effets de crénelage.

Ainsi, le procédé 1 (par les moyens techniques 6 qui sont agencés et/ou programmés pour) corrige de manière simultanée au moins deux des types de défauts suivants de l'au moins une image d'entrée parmi :
- Aberration optique, géométrique et/ou chromatique, et/ou
- Distorsion, et/ou
- Mosaïcage, et/ou
- Bruit de détection, et/ou
- Flou, et/ou
- Résidu de non compensation d'un mouvement par rapport à une scène, et/ou
- Artéfacts induits par une discrétisation spatiale des images.

Dans sa mise en œuvre complète, ce procédé 1 de restitution d'une image permet d'obtenir la compensation des défauts de projection optique sur le capteur 3 ou l'au moins un capteur 3, et apporte une réduction des bruits de détection des intensités lumineuses. En particulier, il compense aussi les effets de mosaïcage sur les capteurs 3 à détection spatialement séparée de plusieurs couleurs, et peut aussi compenser efficacement des résidus de mouvements d'un module caméra par rapport à la scène.

Le procédé 1 s'appuie donc sur un traitement global des opérations de restitution, contrairement à un état de l'art antérieur qui procède par étapes successives, avec les défauts inhérents précédemment cités. Ce procédé 1 peut prendre en entrée les données de l'image détectée par l'au moins un capteur 3 dans un premier canal appelé 'image d'entrée' Iₑ, et aussi dans un deuxième canal appelé 'données d'aberration optique' 9 matérialisable par des matrices dites PSF, des données de distorsion optique apportées par l'objectif ou l'au moins un système d'imagerie 4 et de focalisation dans les conditions de position relative aux autres éléments optiques (capteurs 3, et éléments de la scène), assez précises pour connaitre ces défauts à l'échelle de la projection de la lumière sur chaque photosite. En particulier, il est préférable de calculer les PSF 9 en fonctions des distances aux différents objets sur la scène, afin d'obtenir une compensation de ces aberrations optiques tenant compte de la distance réelle de focalisation de chaque objet photographié, ce qui augmentera la profondeur de champ effective lors de la restitution de l'image par rapport à l'état de l'art.

Ainsi, le procédé 1 dans son implémentation la plus complète fournit en sortie une image dite restituée I_{R}. Cette image I_{R} possède en particulier une absence de mosaïcage, une réduction significative de bruit selon un réglage à ajuster le cas échéant, une correction de distorsion de position et de flou de l'image adapté à chaque région de l'image, une compensation de mouvements relatifs entre l'objectif 4 ou l'au moins un système d'imagerie 4 et la scène observée, pour son mode d'implémentation le plus complet, qui permet d'exploiter le meilleur parti du procédé 1.

Par rapport à l'art antérieur, le procédé 1 permet de ne plus empiler des étapes de corrections dissociées entre elles, ce qui évite des effets de conjugaisons des défauts inhérents à chaque étape. Il permet aussi de limiter la portée des effets des suppositions que cet art antérieur était amené à faire, telles que la faible variation spatiale de chaque couleur autour des photosites de couleur détectées pour interpoler les valeurs qui auraient été dues être détectées dans les photosites absents (car à l'emplacement d'une des autres couleurs détectées).

Ainsi, on peut envisager différentes variantes (éventuellement combinables entre elles) du procédé selon l'invention :
- Dans une variante, si l'au moins un capteur d'image 3 ne génère pas de mosaïcage, grâce par exemple à une technologie de détection de différents canaux de couleur en un même endroit, ou parce que l'on aurait préféré quand même produire un démosaïcage par interpolation ou une autre méthode pour obtenir des valeurs de couleurs à des endroits où les photosites manquent physiquement, le procédé 1 utilise de telles données non mosaïqués. Il continue à apporter une très bonne qualité de restitution d'image, en permettant par exemple de continuer à réduire le bruit et à réduire le flou de l'image et éventuellement à réduire aussi par exemple les distorsions de déformations par rapport à l'homothétie idéale si les données de PSF 9 présentées au procédé comportent ces informations de distorsion. Il apportera même, le cas échéant, un complément de démosaïcage, si un démosaïcage des données d'entrées n'a été fait que partiellement.
- Dans une autre variante, dans le cas où la détection comporte un mosaïcage, il reste préférable de présenter au procédé 1 les données non démosaïquées car la génération des informations spatialement plus dense de l'image par rapport à la mosaïque d'entrée peut être plus précise et comporter moins ou plus du tout d'artéfacts, selon les réglages de mise en œuvre du procédé 1, alors qu'un démosaïcage de l'art antérieur comportera plus d'artéfacts.
- Dans une variante de mise en œuvre non préférée (car elle laisserait un flou non corrigé), le procédé 1 ne comporte qu'une réduction du bruit et de distorsion, sans nécessairement corriger les aberrations conduisant à du flou. Dans ce cas, il suffira au niveau du canal de convolution avec les PSF 9 de ne faire qu'une translation dans le plan (X, Y) des valeurs d'un pixel de l'image restituée selon les informations de distorsion, sans tenir compte des effets de flou. Formellement, cela reviendrait à convoluer avec une matrice de PSF 9 ne comportant qu'un coefficient ou quelques coefficients non nul, en n'y retranscrivant pas tout l'étalement de point dans son ensemble lié aux informations d'étalement de point dans la matrice de PSF présentée au procédé. Et de façon simplifiée, l'on peut se contenter de translater la valeur d'un pixel plutôt que de faire des multiplications nulles à certains endroits pour modéliser une information de distorsion géométrique. Il conviendra d'exprimer les opérations de gradient de telle sorte à prendre en compte ces translations dans les modes de calculs pour obtenir les effets escomptés sur l'image restituée.
- Dans une variante, si réduire le bruit de l'image conduit à réduire aussi la restitution des détails qui ne sont pas du bruit, ou pour tout autre raison qui ferait qu'on ne souhaite pas réduire le bruit grâce au procédé, il suffit de modifier la pondération de la ou des pénalités conduisant à comprimer le bruit dans l'image restituée I_{R} pour laisser subsister cet aspect dans l'image restituée, ou encore le cas échéant construire un ou des critères de pénalités moins sensibles au bruit (par exemple en ne construisant les pénalités que pour être sensible aux effets de crénelage sur le bords des objets de l'image, mais pas aux sauts de couleurs ou luminosité à l'intérieur des objets).

Le premier terme D dépend de différence(s) entre d'une part l'au moins une image d'entrée Iₑ et d'autre part le résultat I_{ck} d'une modification de l'image I_{Rk} en cours de restitution à l'itération k au moins par une fonction 9 décrivant la réponse de l'au moins un système d'imagerie.

Le premier terme D peut comprendre la somme de plusieurs termes Di.

De préférence, chaque composante de distance Dᵢ (1 si i max = 1) est calculée autant de fois qu'il y a de prise d'images différentes, et sommées entre elles, soit directement, soit avec des coefficients de pondération entre les prises d'image.

Afin d'obtenir les meilleurs résultats possibles à partir de ce procédé 1, une connaissance de préférence précise de la fonction de transfert optique 9 est utile, spatialement dans le champ de l'image et aussi par rapport aux autres paramètres éventuels de distance relative des éléments optiques scène, objectif, capteur(s) 3, tels que entre autre la connaissance des fonctions de transfert optique 9 (représentable par des matrices PSF) soient éventuellement différenciées par rapport aux différentes distances aux objets de la scène.

Le résultat I_{ck} comprend et/ou consiste en un produit de convolution de l'image I_{Rk} en cours de restitution à l'itération k par la fonction 9 décrivant la réponse de l'au moins un système d'imagerie, et éventuellement traité par la transformation géométrique TG (référencée 10).

En référence à la figure 1, TG(prise p) est la transformation géométrique pour chaque prise p d'image, par exemple qui modélise un déplacement relatif de la scène par rapport au(x) module(s) caméra 3,4 (c'est par exemple le module caméra qui se déplace dans le cas où la scène est un paysage donc fixe), et/ou modélise une autre projection sur un autre module caméra, cette TG() peut modéliser une différence de distance entre les 2 modules, si cette dernière n'est pas intégré dans la PSF 9.

Les coefficients des PSF() peuvent être légèrement modifiés pour modéliser la partie fractionnaire de déplacement de la scène, qui ne correspond pas au pas de grille de la PSF, dans les cas particuliers où ce paramètre est fixe. Mais dans le cas d'une implémentation par objets représentant l'image, cette remarque n'est pas nécessaire car la convolution à la PSF doit s'adapter de toute façon à des coordonnées non alignées sur une grille particulière pour chaque objet. Dans ce dernier cas, la TG agit sur un déplacement local de chaque objet et son contour. Si l'objet est large, la TG() peut aussi distordre son apparence, le déformer, par application différente de déplacements dans ses différentes parties.

La fonction TG peut être placée avant ou après la convolution de I_{Rk} avec la PSF 9. Préférentiellement, elle peut être placée après pour ne pas répéter les opérations de convolution pour chaque image en entrée.

La fonction 9 décrivant la réponse de l'au moins un système d'imagerie 4 est une fonction de transfert optique (OTF) de l'au moins un système d'imagerie ou une fonction d'étalement du point (PSF) de l'au moins un système d'imagerie.

La fonction 9 décrivant la réponse de l'au moins un système d'imagerie dépend :
- d'une distance (Z) entre l'au moins un capteur 3 et un objet imagé par l'au moins un capteur 3, et/ou
- d'une distance (z_{co}) entre une partie de l'au moins un système d'imagerie 4 et l'au moins un capteur 3, et/ou
- d'une distance (zₒₛ) entre une partie de l'au moins un système d'imagerie 4 et un objet imagé par l'au moins un capteur 3, et/ou
- d'un état de l'au moins un système d'imagerie 4, tel qu'un réglage de zoom ou focus ou d'ouverture numérique de l'au moins un système d'imagerie 4, et/ou
- du pixel de l'image en cours de restitution et/ou du photosite de l'au moins un capteur 3, et/ou
- d'un ou plusieurs angles entre l'au moins un capteur 3 et l'au moins un système d'imagerie 4.

Le second terme P comprend :
- au moins une composante P₁ dont l'effet est minimisé pour de faibles écarts d'intensité entre pixels voisins de l'image I_{Rk} en cours de restitution à l'itération k, et/ou
- au moins une composante P₃ dont l'effet est minimisé pour de faibles écarts de teinte entre pixels voisins de l'image I_{Rk} en cours de restitution à l'itération k, et/ou
- au moins une composante P₂ dont l'effet est minimisé pour de faibles fréquences de changements de direction entre pixels voisins de l'image I_{Rk} dessinant un contour.

Le second terme P peut ainsi comprendre une somme de plusieurs termes Pi.

On va maintenant voir des détails d'implémentation du procédé 1.

Le procédé 1 comporte la représentation de l'image dite restituée I_{R} ou en cours de restitution I_{Rk}, dans une table de valeurs appelée table de restitution. Elle contient à des positions discrétisées des valeurs de couleurs, par exemple selon les trois couleurs R (rouge), V (vert), B (bleu), ou dans un autre référentiel. L'on peut voir ces éléments comme des objets élémentaires carrés ou rectangulaires juxtaposés, comportant trois (ou n_{c}) propriétés de couleurs, en plus de propriétés de largeur et longueur des éléments communes à tous ces éléments, ainsi que la propriété de position implicitement connue par un rangement en succession de ligne dans la table et au pas constant dans chaque direction x et y (x et y, aussi notées X et Y, étant deux directions orthogonales dans le plan de l'image dite restituée I_{R} ou en cours de restitution I_{Rk}). Ces objets peuvent être appelés pixels.

Cette table représente des objets élémentaires selon de préférence une résolution égale ou supérieure à celle de la réunion de tous les photosites de toutes les couleurs de l'au moins un capteur 3. Elle peut avoir un pas de balayage et de positions décalé par rapport aux photosites de l'au moins un capteur 3, mais de préférence en synchronise spatial avec ces derniers. Par exemple, pour une matrice élémentaire de filtrage de couleur (ou « Color Filter Array » en anglais ou CFA) de 4 photosites R (Rouge), V1 (Vert 1), V2 (Vert 2), B (Bleu), disposés sur 2 x 2 lignes et colonnes, elle peut avoir une représentation numérique, pour chacune des par exemple trois propriétés de couleurs R (rouge) , V (vert), B (bleu), de un pixel en face du R (Rouge), puis de un pixel en face du V1, du V2, du B, c'est-à-dire au total 4 pixels comportant un canal R, V, B, en correspondance spatiale des 4 photosites R, V1, V2, B de détection, et répétés autant de fois que nécessaire dans les directions x et y pour décrire tout le capteur 3 associé à l'image Iₑ.

On peut aussi doubler le nombre de pixels de restitution dans chaque direction X et Y, ce qui ferait 16 pixels restituant le Rouge, Vert, Bleu pour chaque cellule élémentaire du CFA. On peut qualifier ce ratio, dit de sur-échantillonnage, de valeur ici 2 x 2 = 4 pour les deux directions x et y à la fois (si le motif élémentaire CFA comporte 2 x 2 photosites). D'autres ratios seraient évidemment possibles.

Il serait aussi possible de sous-échantillonner, bien que cela ne procèderait pas à une amélioration de restitution de la qualité de l'image I_{Rk} ou I_{R} en termes de netteté, mais permettrait une bonne qualité d'une image I_{R} ou I_{Rk} comprimée (en termes de nombre de pixels).

Cette table peut aussi être complétée, ou remplacée par une liste d'objets décrivant l'image I_{Rk} ou I_{R} . Chaque objet peut ainsi être le pixel carré ou rectangle, ou des objets comportant plus de propriétés tels qu'un contour, des composantes de couleur moyennes, mais aussi des composantes de dégradé de luminosité et de couleur par exemple, et une forme particulière. Cette deuxième représentation permet plus de liberté de représentation des positions, avec éventuellement des coordonnées représentées par des nombres ayant plus de résolution qu'une collection de pixels à des endroits prédéfinis. De plus, l'on peut autoriser l'addition des couleurs et intensités d'objets qui seraient superposés à certains endroits.

Formellement, nous écrivons l'image restituée I_{Rk} à l'itération k (I_{Rk}) comme la somme des nₘ objets Oₘₖ la représentant : [Math. 1] ${I}_{Rk} = {\sum }_{m = 1}^{nm} {O}_{mk}$

Le procédé 1 comporte un canal de sortie de l'image restituée I_{R}, qui peut être une mémorisation de l'image en cours de restitution I_{Rk}, à une phase où elle est estimée restituable par rapport au processus de restitution quand il est itératif.

Dans le cas où l'image I_{Rk} ou I_{R} est une somme d'objets différents de pixels, il peut être nécessaire de calculer la valeur que génère chaque objet pour chaque couleur, selon la grille x, y choisie pour restituer l'image I_{R}, en sortie du procédé 1.

On peut aussi fournir en sortie l'image I_{R} sous la forme de ses objets directement en sortie, si cela est avantageux en termes de volume de données, ou de façon à obtenir un format de sortie dit vectorisé.

Le format de restitution de l'image I_{R} peut avantageusement être dans l'une des représentations objet décrite dans la mise en œuvre, afin de bénéficier de toute la finesse de résolution et les compensations de pixelation (discrétisation) permises.

De même, lors de la comparaison pour les distances Di entre l'image convoluée aux PSF 9, le procédé 1 peut faire ce même type d'évaluation des couleurs locales dans les objets en face de la grille de discrétisation des PSF, de façon à connaitre les couleurs calculées en place des positions des photosites de l'image d'entrée pour faire les comparaisons de distances aux endroits adéquats, sans décalage, pour une précision de restitution maximale.

Nous allons maintenant décrire différentes façons possibles de mise en œuvre du procédé 1. Il s'agit de construire une façon de prendre en compte de façon directe l'ensemble du modèle des défauts optiques, entre l'au moins une image d'entrée Iₑ représentée par les valeurs des différentes composantes de couleurs des photosites et le calcul que les défauts optiques induisent en ces endroits, à partir de l'image en cours de reconstitution I_{Rk}.

Le modèle des défauts optiques 9 est pris en compte par un calcul des effets qu'il induit à partir de l'image I_{Rk} dite en cours de restitution, en composant cette image en cours de restitution I_{Rk} avec le modèle 9 des défauts optiques, par exemple par un produit de convolution entre la matrice des valeurs lumineuses de I_{Rk} (en chaque point d'une grille assez fine), et la matrice d'étalement de point dite PSF 9 sur cette même grille, ce qui en sortie fourni une matrice de valeurs selon une grille I_{ck} (grille qui permet la comparaison aux photosites au niveau de capteur 3 correspondant à l'image d'entrée Iₑ).

Bien entendu, un calcul de convolution peut se faire par multiplication dans le domaine fréquentiel, et il est envisageable aussi de prendre en compte les effets d'étalement de points par les transformées de fourrier spatiales des matrices PSF 9, appelées généralement OTF (Optical Transfer Function), qu'il suffit alors de multiplier aux transformées de fourrier de l'image en cours de restitution, puis de revenir au domaine spatial par transformée inverse, si ce mode opératoire présente un intérêt.

Nous écrivons formellement : ${I}_{ck} = TG \left({I}_{rk}\right) \left(*\right) PSF$ où (*) signifie produit de convolution.

TG() peut être l'identité, ou une transformation géométrique, qui consiste à déplacer localement les éléments, soit par translation de pixels dans une telle représentation, soit par modification équivalente des PSF par recalcul du jeu de coefficients pour prendre en compte cette transformation, soit éventuellement un mélange des deux.

Nous pouvons aussi écrire : ${I}_{ck} = TG \left({I}_{rk}\left(*\right) PSF\right)$ ce qui signifie que la transformation est faite après application de la PSF. Dans ce cas, l'avantage est de ne pas recalculer le produit de convolution pour les différentes images, ce qui limite la quantité de calculs.

Un exemple de façon d'écrire I_{ck}, pour prendre en compte que chaque fonction d'étalement de point 9, issue d'un point (xi, yi) de la scène peut produire un étalement de point différent, est : [Math. 2] ${I}_{ck} \left({i}_{cx}, {i}_{cy}, {i}_{coul}\right) = {\sum }_{{i}_{y} = - Δy}^{Δy} {\sum }_{{t}_{x} = - Δx}^{Δx} {C}_{rk} \left({i}_{rx}+{i}_{x},{i}_{ry}+{i}_{y},c\right) ∗ PSF \left({i}_{cx},{i}_{cy},{i}_{rx}+{i}_{x},{i}_{ry}+{i}_{y}\right)$ irx et iry sont choisi en correspondance à icx et icy.

Par exemple, si l'au moins une image d'entrée Iₑ comporte un pixel restitué (ayant 3 couleurs) en face de chaque photosite.
où Δx et Δy sont des valeurs généralement très inférieures au nombre de photosites de l'écran, ils sont choisis pour représenter les endroits où l'étalement de point produit une valeur significativement non nulle.

Les 2 premiers indices de la matrice PSF() représentent l'étalement de point, obtenues pour un point xi, yi, qui serait la valeur lumineuse de la scène pour ce point de la scène en correspondance avec ce xi, yi du capteur.

Le calcul ci-dessus revient donc à considérer les valeurs de l'étalement de point aux endroits (xi, yi) du capteur, en considérant les différents points de la scène en correspondance avec les points (xi + x, yi + y) du capteur.

Cette notion est indexée par les notations physiques. Dans une représentation informatique, on aura tendance à écrire autrement les PSF car beaucoup de coefficients seraient nuls en xi, yi pour les 2 premiers indices : on les re-centre autour des 2 premiers indices, pour obtenir des tables de valeurs non nulles physiquement plus compactes. Ceci est un détail d'implémentation qui ne change rien au principe.

I_{ck} est la valeur de la composante de couleur c, à la position (xi, yi) obtenue sur le capteur, à l'itération k, donc comme convolution de l'image en cours de restitution, à l'itération k, représentée par des composantes de couleur Cᵣₖ, aux positions (xi + x, yi + y) pour la couleur c.

De ce calcul, l'on créée un premier indicateur ou terme appelé distance D₁, éventuellement complété d'autres termes D₂..D_{nd}, issu d'une comparaison entre I_{ck} et Iₑ, que l'on note D₁( I_{ck}, Iₑ) : $D = {D}_{1} \left({I}_{ck}, {I}_{e}\right) + {D}_{2} + . . + {D}_{nd}$ Ou $D = {D}_{1} \left({I}_{ck}, {I}_{e}\right)$

En parallèle, l'on calcule une ou plusieurs pénalité(s) dite P₁ , P₂, ..Pₙₚ, directement à partir de l'image Iᵣₖ.

Afin que l'image I_{Rk} puisse restituer au mieux la scène observée, il est alors procédé à une itération, d'où l'indice k.

L'on aboutit à un indicateur d'écart E global : [Math. 3] $E = {\sum }_{i = 1}^{nd} {α}_{i} {D}_{i} + {\sum }_{i = 1}^{np} {β}_{i} {P}_{i}$
où nd est le nombre de distances Di,
np le nombre de pénalités Pi
avec par exemple :
   nd=1
   np=1
   α₁ = 1
   β₁ qui peut être ajusté pour donner plus ou moins de poids entre la distance qui force à se conformer à l'image d'entrée Iₑ (ou aux images d'entrée), et la pénalité qui force à rendre l'image I_{Rk} ou I_{R} conforme à une autre propriété, ou à posséder une certaine cohérence par rapport aux images que le module caméra ou l'au moins un module caméra est censé observer, ce qui revient aussi à dire que cet indicateur de pénalité permet aussi de sélectionner les images qu'il est le plus probable d'observer parmi celles qui seront restituées. Par exemple, il est peu probable d'observer une image I_{Rk} ou I_{R} comportant de la « neige » rouge, vert, bleu à l'intérieur de ses textures, et l'on peut dire que l'indicateur de pénalité P est construit pour rendre moins probable l'apparition de telles images restituées I_{R}, quand il est construit pour être sensible à un bruit de couleur dans l'image I_{Rk} ou I_{R}.

La mise en œuvre du procédé vise à obtenir une image restituée Iᵣ qui minimise l'indicateur E.

Sauf cas particulier ou l'expression de la distance D1 permettrait un calcul direct pour la minimiser, et où la pénalité P1 le permettrait aussi, ou serait prise nulle, la méthode générale de résolution peut par exemple s'obtenir par une méthode dite de gradient de newton, qui permet de trouver le minimum d'une fonction, en faisant varier les paramètres d'entrée à l'inverse du gradient d'une fonction E, pour en minimiser la valeur.

Ainsi, l'on calcule à chaque étape la somme des dérivées de chaque terme de E par rapport à l'ensemble des paramètres de l'image restituée Iᵣₖ., puis l'on fait évoluer les éléments de l'image I_{Rk} par rapport à ce gradient.

Le but des itérations 7 est de modifier l'image Iᵣₖ à chaque étape, de façon à rendre minimal l'indicateur E.

En complément, préférentiellement, des opérations de recherches de contours sont à mener sur l'image restituée I_{Rk} ou I_{R} à au moins certaines itérations, afin de créer, déplacer.

La distance D ou les distances Di sont donc issues de Irk (*) PSF (ou TG(Irk (*) PSF) alors que P ou les Pᵢ sont issues directement des Irk.

A la fin du processus de restitution 8, soit la valeur de E est jugée suffisamment petite, soit une estimation des gradients par rapport à elle est suffisamment petite, soit on limite le nombre d'itération pour estimer que l'image obtenue est restituable.

Les calculs des distances Di sont faits préférentiellement sur l'ensemble des positions des photosites. Il convient donc de calculer les valeurs des différentes intensités des couleurs à partir de Irk (*) PSF.

Les pénalités Pᵢ peuvent être calculées en des positions non nécessairement liées aux positions des photosites. Elles peuvent l'être à partir d'objets élémentaires dit pixels de l'image restituée, ou à partir de propriétés d'objets plus grands, sans nécessairement faire apparaitre les propriétés de couleurs selon la grille précise de restitution des images ou de la PSF par exemple, mais par un calcul plus global à partir de propriétés de l'objet.

Une première phase de la modification itérative 7 consiste à générer une initialisation des valeurs de la table de restitution, i.e déterminer I_{Rk} pour k =1. Plusieurs mises en œuvre sont possibles :
a) On peut recopier directement les valeurs de l'image dite 'd'entrée' Iₑ précédemment décrite. Lorsque les défauts de flou et distorsion de l'image sont mineurs, cette option est préférable en termes de simplicité de mise en œuvre...
b) Préférentiellement, à partir des fonctions d'étalement de point (PSF) 9, on calcule une certaine inversion de la matrice la représentant, cela au moins sur les fréquences spatiales les plus basses, significatives. A partir de cette matrice dite iPSF, qui peut être préférentiellement spécifique en fonction de chaque longueur d'onde, et de chaque position dans le champ, l'on procède à un produit de convolution avec les valeurs des photosites voisins issus de l'image d'entrée Iₑ pour produire une première valeur d'image I_{Rk} pour initialiser la table de restitution.
c) Pour les cas où l'au moins une image Iₑ serait prise en mode vidéo, ou si elle est réputée changer lentement, on peut aussi laisser la valeur de la précédente image restituée comme valeur d'initialisation de la table de restitution, sauf au début de la séquence vidéo où il est préférable de procéder comme indiqué aux cas a ou b précédents.

Une seconde phase de la modification itérative 7 (éventuellement réduite à une seule itération, sans initialisation) consiste à utiliser un calcul direct de propagation de l'image I_{Rk}, à travers une convolution de l'image de la table de restitution avec les matrices locales d'étalement de point (PSF) 9, qui seront préférentiellement spécifiques par canal de couleur, par position dans l'au moins un capteur 3, et peuvent dépendre encore d'autres paramètres tels que la distance z_{co} entre l'objectif 4 ou l'au moins un système d'imagerie 4 et le capteur 3 ou l'au moins un capteur 3 ainsi qu'entre l'objectif 4 ou l'au moins un système d'imagerie 4 et les différents objets de la scène, distance zₒₛ(p), de préférence régionalisée pour chaque partie 'p' de l'image I_{Rk}, de tel sorte à modéliser au mieux la fonction de transfert optique 9 entre la scène et le capteur 3 ou l'au moins un capteur 3, et cela pour ses différents canaux de couleur.

Ce calcul direct permet d'estimer l'indicateur de l'écart entre l'image obtenue par les pixels des capteurs 3, et celle calculée. Il existe alors différentes façons d'obtenir l'image restituée I_{R :}
Soit, de façon moins préférentielle, l'on calcule une inversion au sens moindre carrés, afin de trouver la meilleure image qui convoluée par le champ des PSF 9 précédemment décrite, fourni une 'distance d'erreur' minimale par rapport à l'image obtenue sur le capteur 3 ou l'au moins un capteur 3, cela globalement aux par exemple trois canaux de couleurs, par exemple pondérés du même poids, ou pas. Dans ce cas, l'on peut se référer à des méthodes connues de méthodes de moindres carrés. On remarquera aussi que l'initialisation n'est éventuellement pas nécessaire, et qu'il n'y a qu'une itération sur la restitution de l'image (bien que la méthode des moindre carrés conduise à générer une matrice carré qu'il convient d'inverser, ce qui est une itération interne à ce calcul et qui d'une certaine façon remplace les itérations dont il est question ci-après).

Soit, de façon préférable afin d'obtenir une meilleure résistance au bruit de l'image dite restituée, on procède par itération, en partant de la valeur initiale I_{Rk} pour k =1 présente dans la table de restitution, que l'on va faire évoluer à chaque étape. Afin de calculer comment faire évoluer la table de restitution, nous indicerons par l'entier k la restitution à chaque étape d'itération.

Afin de guider les évolutions de la table de restitution de l'image I_{Rk}, on calcule dans un premier terme par exemple formellement appelé D₁ de somme des carrés des écarts entre la table de conversion de l'image restituée I_{Rk} (image à l'étape k) convoluée par les PSF locales. D'autres distances Di sont aussi possibles telles que la somme des valeurs absolue, ou toute autre fonction qui permet de diminuer la distance D quand les valeurs des pixels des deux images se rapprochent globalement.

Quand un terme de cette distance D peut être dérivé formellement afin de calculer directement une matrice locale de dérivées partielles ∂*y*/∂*x* de chaque terme de D entre la valeur y de la couleur en la position d'un photosite de l'au moins une image d'entrée Iₑ, et la valeur x d'une des propriétés des éléments de l'image reconstituée I_{Rk} ou I_{R}, telle que sa valeur, il est préférable de le faire pour limiter les calculs. Dans ce cas, cela revient à faire intervenir dans ces calculs des termes issus des matrices de PSF locales.

Sinon, l'on peut aussi procéder par différence finie, ce qui fournit un estimateur de la dérivée.

Ces gradients ne sont à calculer qu'aux positions où il y a des photosites de mesure de couleurs dans l'au moins une image d'entrée Iₑ. Aux autres endroits, le gradient est par définition nul, ce qui permet de l'évoquer formellement dans la présente description, mais aucun calcul ne sera à effectuer en ces positions.

Afin de clarifier les exemples d'implémentation dans la présente description, il est commode de remarquer que l'on peut considérer au moins deux espaces de repérage : un espace dit ξr lié à l'image en cours de reconstitution I_{Rk}, un espace dit ξc lié à l'image ou aux images d'entrée Iₑ du procédé 1. Dans le cas de plusieurs images en entrée Iₑ, plusieurs espaces peuvent être considérés dit ξce avec e un indice pour les nommer.

Dans le cas où l'image restituée I_{Rk} ou I_{R} est décrite par une juxtaposition de pixels, pour une forme rectangulaire, on peut décrire ξr par deux indices iᵣₓ et i_{ry} qui prennent leur valeurs entre 1 et nₓᵣ et 1 et n_{yr} respectivement, nₓᵣ et n_{yr} étant le nombre de pixels. D'autres formes que le rectangle sont évidemment possibles, qui peuvent compliquer cette description des indices.

Les positions physiques correspondantes peuvent alors par exemple s'écrire : $xr \left(irx, iry\right) = {i}_{rx} * PasImgRx ,$ $yr \left(irx, iry\right) = {i}_{ry} * PasImgRy ,$ avec PasImgRx et PasImgRy les distances entre pixels dans les directions x et y. Ces distances physiques restent relatives : elles dépendent de l'échelle à laquelle l'image I_{Rk} ou I_{R} est restituée. Cependant, elles devront être raccordées aux distances physique du capteur d'image 3 ou de l'au moins un capteur 3, afin de permettre les calculs de convolution de PSF 9 à la bonne échelle, entre l'image restituée I_{Rk} ou I_{R} et la ou les images au niveau du capteur I_{ck} .

Associé à l'espace ξr, nous introduisons aussi l'indice i_{rcoul} qui servira à indexer les éléments qui suivent par rapport à leurs propriétés associées aux composantes de couleurs dans l'image restituée. Par exemple, i_{coul} peut prendre une valeur entre 1 et 3, 1 pour le Rouge, 2 pour le Vert, 3 pour le Bleu dans l'image restituée. Plus de composantes de couleurs peuvent le cas échéant être restituées, par exemple une composante dite infra-rouge, une composante dite ultra-violet, le chiffre 3 ici étant conseillé par rapport au mode d'affichage 3 couleurs des écrans et à notre tri-chromie humaine, ce qui est nullement limitatif quant à d'autres valeurs.

Les méthodes exposées dans ce procédé 1 peuvent s'appliquer aussi à une image restituée en noir et blanc (donc en nuances de gris), dans ce cas, il conviendra de considérer que i_{coul} vaut 1.

Pour la ou les images d'entrée Iₑ, dans le cas où elle est rectangulaire, constituée de blocs rectangulaires élémentaires d'acquisition des couleurs (dit CFA), il convient de préférence de repérer la position précise de chaque photosite des CFA de chaque couleur par rapport à un repère commun, plutôt que de par exemple associer une coordonnée commune à tous les photosites de chaque couleur d'un même CFA élémentaire, afin de calculer la valeur de l'image restituée I_{Rk} ou I_{R} par la transformation de l'image restituée vers l'image capteur I_{ck} à la position précise de chaque couleur de chaque photosite. On peut par exemple considérer un système d'index de coordonnées décrivant la position de chaque bloc élémentaire CFA, puis ajouter le décalage pour la position de chaque photosite.

Par exemple, appelons i_{cx} et i_{cy} les indices dans le capteur (d'où le 'c'), variant entre 1 et n_{xc} et 1 et n_{yc} respectivement. Nous ajoutons un 3^{ème} indice i_{coul} pour adresser le type de photosite (coul comme couleur), par exemple variant de 1 à 4 pour respectivement R, V1, V2, B pour Rouge, Vert1, Vert2, Bleu.

Aussi la position physique de chaque photosite s'écrira : ${x}_{c} \left({i}_{cx}, {i}_{cy}, {i}_{coul}\right) = {i}_{cx} * PasCFAx + PosX \left({i}_{coul}\right) ,$ ${y}_{c} \left({i}_{cx}, {i}_{cy}, {i}_{coul}\right) = {i}_{cy} * PasCFAy + PosY \left({i}_{coul}\right) ,$
où PasCFAx représente le déplacement entre chaque bloc CFA en x, de même en y pour PasCFAy.
et PosX(i_{coul}) repère le déplacement physique dans le bloc CFA pour la position de chaque photosite, de même pour PosY(i_{coul}) en y.
L'unité de distance est la même pour PasCFAx ou y et PosX(i_{coul}) ou PosY(i_{coul}).

Il convient alors d'exprimer les éléments de transformation géométrique et de transfert optique, pour prendre en entrée les positions physiques du repère associé à ξr, et en sortie celle du repère associé à ξce. Dans le cas de discrétisation de ces repères par les indices qui balayent les positions de pixels restitués d'un côté, et ceux (les indices) des blocs de photosites (ou directement des photosites) de l'autre, les transformations de transfert optique peuvent prendre la forme d'un produit matriciel, avec une gestion des indices ad hoc pour obtenir les correspondances des positions physiques entre l'image restituée et l'image perçue au niveau du capteur (ou les images au niveau des capteurs 3).

Si lors des calculs de transformation géométriques, les décalages de transformation géométrique fournissent par exemple des positions qui se décalent des positions discrétisées (donc les indices de positions calculées qui acquièrent une partie fractionnaire non nulle), il convient idéalement, par exemple, d'interpoler les valeurs des pixels dans le repère de l'image restituée, pour obtenir une matrice d'entrée aux positions compatibles avec la matrice par exemple de PSF pour que les coefficients de sorties de la convolution Image restituée (x) PSF correspondent aux positions des **photosites,** sans décalage. A défaut de cette précaution, la qualité de l'image restituée I_{R} peut comporter des défauts tels que des décalages entre les couleurs restitués, faisant apparaitre par exemple des résidus de franges colorés autour des éléments de l'image restituée, on des micro-distorsions géométriques liées à ces parties fractionnaires dans les indices de positions calculées non prises en comptes.

A titre d'exemple pour la correspondance entre l'espace ξr et l'espace ξc, supposons que l'image restituée I_{Rk} ou I_{R} comporte 1 pixel (donc 3 couleurs) en face de chaque photosite, et que la CFA comporte 4 photosites R, V1, V2, B.

Nous pouvons définir des offsets d'indices (I_{cfa_x}, I_{cfa_y} ) pour accéder aux photosites par rapport à l'origine du CFA, par :
pour ${i}_{coul} = 1 \left(pour R\right) , \left({I}_{cfa _ x}, {I}_{cfa _ y}\right) = \left(1, 0\right) ;$
pour ${i}_{coul} = 2 \left(pour V1\right) , \left({I}_{cfa_x}, {I}_{cfa_y}\right) = \left(1, 1\right) ;$
pour ${i}_{coul} = 3 \left(pour V2\right) , \left({I}_{cfa_x}, {I}_{cfa_y}\right) = \left(0, 0\right) ;$
pour ${i}_{coul} = 4 \left(pour B\right) , \left({I}_{cfa _ x}, {I}_{cfa _ y}\right) = \left(0, 1\right) ;$

Nous remarquons donc que i_{coul} ne repère pas strictement la couleur reçue, mais plutôt l'indice de position dans le bloc CFA, ce qui conduit à en connaitre à fortiori la composante de couleur. Il peut bien entendu y avoir un 5^{eme} photosite à dominante infrarouge, un 6^{eme} à dominante ultraviolet, faisant par exemple 6 valeurs possibles pour i_{coul}.

Pour le bloc CFA (passage image restituée à bloc CFA) : ${i}_{cx} = 1 + \left({i}_{rx}-1\right) / 2$ ${i}_{cy} = 1 + \left({i}_{ry}-1\right) / 2$

Pour un pixel de l'image, en faisant intervenir les offsets (I_{cfa_x}, I_{cfa_y} ) définis précédemment (Passage indice capteur à image restituée): ${i}_{rx} = 1 + \left({i}_{cx}-1\right) * 2 + {I}_{cfa_x} \left({i}_{coul}\right)$ ${i}_{ry} = 1 + \left({i}_{cy}-1\right) * 2 + {I}_{cfa_y} \left({i}_{coul}\right)$

La fonction D ou D1 peut éventuellement être sommée aussi sur des sous-régions de l'image par exemple, avec des pondérations différentes pour adapter la solution trouvée à telle ou telle caractéristiques de l'image. De plus, on peut aussi adjoindre à D1 au moins une autre fonction dite D2 calculée différemment, pour donner par exemple une sensibilité différente dans telle gamme d'amplitude par exemple.

En particulier, il se peut que la matrice de détection des couleurs comporte par exemple sur les pixels verts V1 et V2 une exposition différente, ou bien une surface de collection différente, afin si par exemple le pixel V1 sature ou est proche de la saturation sur une certaine partie de l'image I_{Rk} ou I_{R}, que le pixel V2 fournisse encore une réponse non saturée dans cette partie. De façon générale, nous pouvons regrouper les photosites V1 proches de la saturation sous le symbole Phₕₙ(i_{cx}, i_{cy}, i_{coul}) dans les expressions ci-dessous (hn comme haut niveau de signal) et les autres photosites R, V2, B ainsi que les V1 des parties de l'image faiblement éclairées sous le symbole Ph_{bn}(i_{cx}, i_{cy}, i_{coul}) (bn comme bas niveau de signal).

Dans ce cas, l'on peut par exemple, dans le calcul de ou des distances D, considérer ; [Math. 4] ${D}_{1} = {A}_{1} ∗ {\sum }_{\left({l}_{cx}, {i}_{cy},{i}_{coul}\right) ϵ \left\{photosites proche saturation\right\}} {\left(\begin{matrix}{I}_{ck} \left({i}_{cx}, {i}_{cy},{i}_{coul}\right) \\ - {Ph}_{hn} \left({i}_{cx}, {i}_{cy},{i}_{coul}\right)\end{matrix}\right)}^{2}$ [Math. 5] ${D}_{2} = {A}_{2} ∗ {\sum }_{\left({l}_{cx}, {i}_{cy},{i}_{coul}\right) ϵ \left\{photosites loin saturation\right\}} {\left(\begin{matrix}{I}_{ck} \left({i}_{cx}, {i}_{cy},{i}_{coul}\right) \\ - {Ph}_{bn} \left({i}_{cx}, {i}_{cy},{i}_{coul}\right)\end{matrix}\right)}^{2}$

Si des photosites sont saturés de façon sure, ils sont de préférence exclus des sommations ci-dessus.

La première distance D₁ est donc calculée avec les photosites assez proches de la saturation ou potentiellement saturés (une telle saturation pouvant par exemple être apprécié selon un critère de réduction significative de la dérivée de la relation entre la valeur mesurée et la luminosité reçue, en dessous d'une certaine valeur), et la deuxième distance D₂ est calculée avec les photosites identifiés comme loin de la saturation (une telle absence de saturation pouvant par exemple être apprécié selon un critère de maintien de la dérivée de la relation entre la valeur mesurée et la luminosité reçue au-dessus d'une certaine valeur).

I_{ck} est le calcul de l'image reconstituée composée (convoluée) avec les informations de PSF 9, et A1 et A2 sont deux coefficients de pondérations.

Alors, pour prendre en compte la saturation de photosites on peut atténuer A1 fortement par rapport à A2 et au reste des autres coefficients (appliqués aux opérateurs de « pénalité »), afin que la solution reconstituée de l'image ne tienne pas beaucoup compte de ces photosites proches ou potentiellement saturés qui ne fourniraient donc pas une information fiable.

Lorsque cela est souhaité, afin de réaliser la mise en œuvre du procédé 1 dans un mode préférable permettant de réduire les bruits ou des effets de crénelage, au moins un autre terme global dit de pénalité P₁ est à calculer, éventuellement complété d'autres termes encore P₂, ... Pₙ.

Ce terme P₁ peut par exemple correspondre à une fonction dite de pénalité calculée comme suit :
nous nommons d'abord en chaque position les éléments de la table de restitution les 3 composantes Rₖ(iᵣₓ, i_{ry}), Vₖ(iᵣₓ, i_{ry}), Bₖ(iᵣₓ, i_{ry}), notées aussi Cₖ( iᵣₓ, i_{ry}, i_{rcoul}) pour les rassembler sous l'indice c.

Cette fonction P₁ peut être la somme sur les 3 ou nc couleurs, de la somme sur le champ (irx, iry) des valeurs absolues (notée | . |) des écarts entre chaque composante : 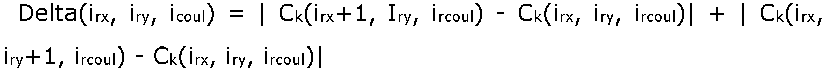 Delta(irx, iry, icoul) = | Ck(irx+1, Iry, ircoul) - Ck(irx, iry, ircoul) | + | Ck(irx, iry+1, ircoul) - Ck(irx, iry, ircoul)|

Alors, il convient d'évaluer une dérivation de cette fonction P₁ par rapport à la valeur de chaque pixel de chaque couleur, par exemple aux endroits où des photosites de la couleur mesurée existent, ou pour l'ensemble des positions discrétisées de x, y.

Dans l'exemple particulier de cette mise en œuvre, la présence des valeurs absolues | . | peut rendre nécessaire de calculer ce gradient de façon numérique (par différence finie), et non à partir simplement d'une dérivation formelle des Delta(iᵣₓ, i_{ry}, i_{rcoul}).

Cette fonction P₁ a été choisie ici car elle évite que la solution qui sera calculée à chaque itération contienne des composantes de bruit de fréquence élevée, car elle a tendance à augmenter la valeur de P₁ lorsque des écarts de valeur se produisent entre pixels voisins. En particulier, cet effet a tendance à contrebalancer les effets de bruit présent dans l'image de départ, et qui tendent à se répliquer dans l'image restituée à partir de la mesure D₁.

Cette façon d'obtenir la pénalité P₁ n'est donnée qu'à titre d'exemple. L'on peut aussi construire un opérateur de pénalité P₃ (qui complète ou remplace P₁) qui pénalise les variations de teinte rapides dans l'image, par exemple en utilisant la formulation : 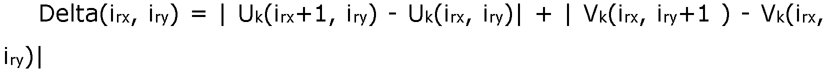 Delta(irx, iry) = | Uk(irx+1, iry) - Uk(irx, iry)| + | Vk(irx, iry+1 ) - Vk(irx, iry)| avec U et V les décompositions dans un système Chroma 1 (U), Chroma2 (V), Luminance (Y), c'est-à-dire Y = (R + G + B) et U = B-Y et V =R-Y par exemple (sans faire intervenir de notion de projection particulière sur un diagramme de restitution de couleur, pour rester simple dans cette description). (Le Vert de l'image est appelé G ci-dessus pour enlever la confusion avec la valeur V de chroma 2)

Donc il faut comprendre à travers cet exemple pour P₃ que l'on exclut de la pénalité la valeur de luminance, libre de reproduire celle de l'objet observé, mais que l'on contraint fortement la restitution de couleur pour laquelle on empêche fortement le bruit de s'y exprimer.

Ce ne sont que deux exemples, d'autres moins simples sont possibles aussi, par exemple en combinant des pixels plus lointains entre eux, en affectant des pondérations différentes sur des calculs de différences pour U et V d'une part, et Y d'autre part.

L'on peut aussi construire P comme étant le minimum de plusieurs fonctions de pénalité générées selon des combinaisons autres, ou des fonctions plus complexes que des multiplications et additions à partir des pixels de couleur restitués à l'étape k.

A ce stade, il n'est pas forcément nécessaire d'ajouter une pénalité P₂ au calcul de P₁ et/ou P₃. Mais on peut le faire en complément, notamment par exemple afin de créer une pénalité sur une propriété plus globale des objets dans l'image en cours de restitution. Par exemple, afin de créer une propriété particulière relative aux contours de l'objet en restitution (par détection de contraste élevé par exemple).

On peut ainsi, dans la pénalité P₂, minimiser les changements de direction fréquents. On peut calculer localement la direction (vecteur dx, dy) de la direction locale du contour, et calculer un indicateur qui augmente quand cette direction change, de préférence en utilisant un carré, ou une valeur absolue afin d'ajouter tout changement qui ne doit pas pouvoir se compenser avec un changement plus loin, de signe opposé.

Ainsi P₂ augmente par exemple si les contours de la luminance Y font des zig-zags. Donc dans P₂, on peut sommer sur tout le champ x, y les précédents indicateurs de pénalité calculés localement.

Dans la suite, nous appelons Gradient, représenté par l'opérateur grad(), l'ensemble des dérivées partielles d'une distance ou d'une pénalité d'un objet élémentaire Cₖ(iᵣₓ, i_{ry}, i_{rcoul}) de l'image restitué, c'est-à-dire typiquement le vecteur de coordonnées les dérivées d'une distance D ou Dᵢ ou pénalité P ou Pᵢ par rapport par exemple à l'ensemble des n_{c} couleurs de Cₖ(iᵣₓ, i_{ry}, i_{rcoul}), et cela pour chaque x, y, c décrivant l'image, ou dans la suite de l'exposé, les dérivées partielles par rapport à d'autres propriétés qui décrivent l'objet Oₘₖ telles que les paramètres de son contour, de ses couleurs, de ses dégradés de couleurs.

De même, on calcule grad( P₂) (x, y, c), ou bien sa différence finie quand la dérivation n'est pas possible.

Ainsi, l'on obtient : 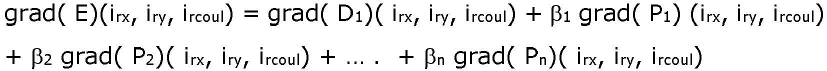 grad( E)(irx, iry, ircoul) = grad( D1)( irx, iry, ircoul) + β1 grad( P1) (irx, iry, ircoul) + β2 grad( P2)( irx, iry, ircoul) + .... + βn grad( Pn)( irx, iry, ircoul)

Les coefficients β₁ ,.. βₙ qui ne sont pas nécessairement fixes sont choisis de façon à obtenir l'arbitrage souhaité entre la fidélité de restitution de l'image par rapport aux photosites de l'au moins une image d'entrée Iₑ, et la contrainte souhaitée par exemple de réduction du bruit. Selon les modes de réalisation, ces coefficients peuvent être modifiés en fonction du type d'image, ou régionalisés par partie d'image - ce qui revient à découper la somme contenue dans chaque terme Pᵢ en plusieurs sous-sommes avec des coefficients β différents, afin si nécessaire d'adapter au mieux la restitution d'une image non bruitée et la plus fidèle possible aux mesures.

De façon technique, pour les x, y non concernés par un photosite de détection de la couleur c, grad(D₁) y est nul par définition (car aucune comparaison de l'image reconstruite n'y est possible). Alors, il est nécessaire de choisir les indicateurs de façon à rendre au moins un grad(Pᵢ), non nul pour créer une contrainte de choix en ces positions.

Sinon, alternativement, pour déterminer les pixels en dehors de la grille de détection du capteur 3 ou de l'au moins un capteur 3, on peut utiliser une interpolation linéaire ou cubique, ou toute autre méthode apte à choisir des points ne dégradant pas, de préférence le bruit de l'image, donc généralement une méthode privilégiant plutôt les basses fréquences spatiales par rapport aux points à côté. On peut aussi les choisir par une méthode minimisant le crénelage des contours, quand ces points appartiennent à un contour d'un objet, selon un critère précédemment évoqué à mettre en place.

Alors, on calcule pour chaque position x, y, et chaque couleur i_{rcoul} : ${C}_{k + 1} \left({i}_{rx}, {i}_{ry}, {i}_{rcoul}\right) = {C}_{k} \left({i}_{rx}, {i}_{ry}, {i}_{rcoul}\right) - G * grad \left(E\right) \left({i}_{rx}, {i}_{ry}, {i}_{rcoul}\right)$

La valeur du coefficient G peut être calculée et le cas échéant ajustée à chaque itération k, afin d'éviter une éventuelle oscillation de la solution, mais aussi sa convergence rapide. L'homme de l'art peut se référer aux nombreuses méthodes de la littérature autour de la recherche de solutions d'une fonction par la méthode du gradient de Newton.

Ainsi, la solution Cₖ₊₁(iᵣₓ, i_{ry}, i_{rcoul}) doit finir par minimiser la somme des Dᵢ et des αᵢ Pᵢ.

A cette fin, il est préférable de choisir des fonctions dites convexes pour ces différents indicateurs, ce qui assure en théorie l'unicité de la solution recherchée. Si ce n'est pas le cas, des compléments d'itération peuvent être ajoutés, l'homme de l'art peut utiliser des méthodes dites de recuit thermique par exemple pour sortir de minimum locaux.

L'opération d'itération peut être répétée afin d'obtenir par exemple une valeur de grad(E)( iᵣₓ, i_{ry}, i_{rcoul}) minimale inférieure à un certain seuil, à l'itération k que l'on estime alors être la dernière. L'on peut aussi arrêter les itérations après un certain nombre d'itérations, (considérant que les ajustements devront devenir négligeables, ou simplement parce que le temps de restitution de l'image deviendrait trop grand.)

La solution Cₖ(iᵣₓ, i_{ry}, i_{rcoul}) obtenue représente alors l'image dite traitée. Cela déclenche la sortie de la boucle d'itération, et l'obtention de l'image restituée I_{R}.

Globalement, la première contrainte sur la fonction D ou D₁ crée une force qui a tendance à faire passer l'image restituée entre les points de l'image obtenue sur le capteur.

La fonction P₁ ou P₃ crée une force qui empêche les points voisins de trop s'écarter en valeur, pour les 2 exemples proposés. Elle réduit donc le bruit de l'image restituée par rapport à l'image initiale potentiellement bruitée.

La fonction P₂ crée une force qui limite les effets de créneaux sur les bords des objets, pour l'exemple proposé.

D'autres fonctions Dᵢ ou Pᵢ peuvent être ajoutées, ou d'autres façon d'écrire l'itération, afin par exemple de mieux modéliser les variations de la texture de l'image à l'intérieur des objets, mais cet autre exemple n'est bien sûr pas limitatif et de nombreuses autres façons de créer des méthodes de pénalité sont imaginables, afin de guider la reconstitution de l'image vers tel ou tel autre type d'image.

A titre d'exemple, il est possible de guider la solution selon l'invention vers une image noir et blanc, simplement en pénalisant fortement les termes U et V précédemment cités pour les contraindre à rester proches de zéro. Au contraire, l'on peut accentuer la saturation en couleur de l'image obtenue en pénalisant plus la luminance Y. Et cela le cas échéant en fonction d'autres critères qui peuvent être sensible à telle ou telle caractéristique d'une zone de l'image. Toujours à titre d'exemple, on peut fabriquer une fonction de pénalité qui si la composante verte possède une forte variation locale, mais pas les deux autres Rouge et Bleu, ce qui peut correspondre au feuillage d'un paysage, alors on diminue la pénalité, ce qui aurait pour effet de laisser plus de bruit éventuellement dans l'image restituée car le bruit serait moins perceptible dans ces zones. Donc les exemples d'implémentation des fonctions de pénalités ne sont fournis qu'à titre d'exemple et ne constituent pas des limitations quant à l'écriture d'autres types de fonctions de pénalité.

L'image restituée à l'étape k a été écrite précédemment à partir des Cₖ(iᵣₓ, i_{ry}, i_{rcoul}), ou iᵣₓ et i_{ry} balayent l'ensemble des indices des positions dans le champ de l'image. Et c l'ensemble des couleurs. Les Cₖ(iᵣₓ, i_{ry}, i_{rcoul}) correspondent à des objets élémentaires, d'intensité nulle sur les trois couleurs en dehors d'un rectangle (ou généralement d'un carré) représenté par leur centre situé (x, y), et de côté le pas de discrétisation des positions xᵣ et yᵣ.

Un complément de mise en œuvre peut ainsi préférentiellement fournir de meilleurs résultats en agglomérant ces carrés quand ils sont contigus et d'une propriété optique voisine, au sens par exemple d'une opération la même que celle décrite pour la pénalité P₁ ou P₃.

Afin de remplacer localement ces motifs élémentaires par des objets plus grands, quand le noyau élémentaire de calcul de P₁(x, y, c) ou P₃(x, y, c) est inférieur à un certain seuil, en chaque point (x, y), l'on peut alors créer un objet que l'on appelle *Oₘ* dont l'indice m permet de le ranger dans une liste d'objets, auquel on transfère par exemple une moyenne des propriétés des c ∈ {1.. n_{c}} composantes Cₖ(x, y, c) par exemple. Puis l'objet *Oₘ* peut être complété par une description de contour vectorisée, c'est-à-dire ne résultant plus de la réunion des carrés initiaux, mais par une paramètrisation d'une ligne décrivant cette frontière. Alors cette ligne peut être créée pour éviter de restituer le crénelage des pixels.

Concernant les objets Oₘₖ, d'une façon générale, on peut choisir ces objets parmi une base d'objets, telle que des formes géométriques élémentaires (rectangles, cercles, lignes courbes...).

La façon de représenter l'image restituée à l'étape k peut alors aussi s'écrire : [Math. 6] ${I}_{Rk} = {\sum }_{m} {O}_{mk}$ où chaque *O*ₘₖ représente une fonction non nulle sur une partie seulement de l'image.

Nous écrivons alors la ou les fonctions Dᵢ et la ou les pénalités Pᵢ comme faisait intervenir ces Oₘₖ(x, y, c), c'est-à-dire la valeur de l'objet m en une position x, y du champ du capteur, et exprimée pour une composante de couleur.

Pour les parties de l'image I_{Rk} ou I_{R} qui n'ont pas permis de créer un objet qui rassemble plusieurs carrés, ces carrés peuvent faire partie de la liste des objets *O*ₘₖ qui est donc étendue avec ces objets carrés de côté pₓ, p_{y} les pas de discrétisation x, y, dit objets élémentaires.

Il suffit alors de sommer les indicateurs précédemment évoqués sur m, l'ensemble des objets, afin de les calculer, en plus de la somme sur les x, y, c.

Formellement, cette représentation de l'image I_{Rk} ou I_{R} permet par exemple de prendre des objets qui contiennent par leurs propriétés propres des propriétés qui peuvent limiter le nombre de calculs. De même, le complément de calculs à faire pour faire évoluer les valeurs aux pixels différents de ceux issus du capteur 3 ou de l'au moins un capteur 3, à chaque itération k, peut disparaitre puisque la valeur des signaux de couleurs peut être connue dès que l'objet est vérifié seulement aux photosites de l'image d'entrée Iₑ (ou des images d'entrée Iₑ).

Aussi, les opérations et calculs de pénalité pour éviter le crénelage peuvent être réduites si les objets sont naturellement pas crénelés.

Bien entendu, comme précédemment évoqué dans la description de l'opérateur gradient, de la même façon que le procédé 1 peut calculer la dérivée d'une des pénalités Pᵢ, par rapport aux variations des propriétés élémentaires de chaque Cₖ(iᵣₓ, i_{ry}, i_{rcoul}) pour pouvoir les ajuster à chaque itération, l'on peut calculer ces gradients, formellement, ou par différence finie par rapport aux propriétés de l'objet *O*ₘₖ telles que les variations des paramètres décrivant les positions de son contours, ainsi que les n_{c} paramètres de couleurs, complétés le cas échéant par des paramètres de variations interne de couleur dans l'objet, par exemple.

Pour l'évaluation du gradient des distances Dᵢ, l'on peut bien entendu calculer de même comment cette distance évolue par rapport aux variations des paramètres de Oₘₖ.

Nous pouvons ajouter qu'il n'est pas nécessaire que les objets créés soient considérés comme strictement disjoints spatialement. L'on peut autoriser un recouvrement avec les objets voisins. De la sorte, ce degré de liberté peut parfaire la description de l'image I_{Rk} ou I_{R}, par exemple que l'ensemble des propriétés de l'objet plus grand ne permet pas de représenter toute la finesse de variation de couleurs dans l'objet à l'intérieur. Une zone de l'image I_{Rk} ou I_{R} peut être décrite par un objet de fond, auquel des objets plus fins spatialement à l'intérieur ajoutent des variations de couleurs, plus localement par rapport à l'ensemble dP₁(x, y, c) e l'objet, quitte à ce que ces objets restent des Cₖ(iᵣₓ, i_{ry}, i_{rcoul}) élémentaires.

Aussi, les produits de convolution entre les PSF locales et les pixels de l'image I_{Rk} en cours de restitution à l'étape k peuvent être pré-calculées par rapport à tout l'objet *Oₘₖ,* ce qui peut diminuer le nombre de calculs à réaliser à chaque itération.

Ainsi, l'invention a pour avantages :
- ne pas produire de réduction de la netteté à une étape de réduction de bruit qu'il convient de compenser ensuite, difficilement pour garder une bonne homogénéité de la compensation sur toute l'image.
- D'éviter l'apparition de franges colorées souvent visibles autour des contours des objets de l'image.
- d'éviter l'apparition de bruit de couleur (sorte de neige rouge, vert, bleu) à l'intérieur de la texture des objets, ou plus généralement dans certaines zones de l'image.
- D'inclure à l'image restituée toutes les corrections de prise en compte de distorsion, ainsi que de perte de netteté, de façon homogène et précise sur toute l'image.
- D'améliorer la netteté sur l'ensemble de la profondeur de champ (en Z ) de l'image, et cela au-delà de la zone de netteté de la distance hyperfocale, pourvu de prendre en compte le Z de chaque objet dans les PSF(x,y,c)
- D'éviter les effets dits de fermeture éclair sur les contours des objets.
- D'éviter des effets de fausse couleur dans des parties de la texture des objets.
- De restituer une image bien mieux résolue que l'état de l'art, à densité de pixels équivalente (généralement égale au pas des photosites, mais pas toujours). Afin de restituer complètement la finesse de l'image, il est préférable de l'exporter par ses objets tels ceux décrits, directement. Toute compression ou restitution de l'art antérieur dégradant généralement la qualité

Dans le cadre de la présente description, il est aussi proposé selon l'invention :
- un smartphone (aussi appelé ordiphone ou téléphone mobile intelligent ou téléphone mobile multifonction), mettant en œuvre l'un quelconque des modes de réalisation de procédé selon l'invention venant d'être décrit pour corriger une image acquise par le smartphone (plus précisément par le ou les module(s) caméra, comprenant un objectif et un capteur, du smartphone) et/ou comprenant l'un quelconque des modes de réalisation de dispositif selon l'invention venant d'être décrit agencé et/ou programmé pour corriger une image acquise par le smartphone (plus précisément par le ou les module(s) caméra, comprenant un objectif et un capteur, du smartphone), et/ou
- une utilisation de l'un quelconque des modes de réalisation de dispositif selon l'invention venant d'être décrit et/ou de l'un quelconque des modes de réalisation de procédé selon l'invention venant d'être décrit au sein d'un smartphone (aussi appelé ordiphone ou téléphone mobile intelligent ou téléphone mobile multifonction), pour corriger une image acquise par le smartphone (plus précisément par le ou les module(s) caméra, comprenant un objectif et un capteur, du smartphone), et/ou
- une tablette tactile, mettant en œuvre l'un quelconque des modes de réalisation de procédé selon l'invention venant d'être décrit pour corriger une image acquise par la tablette tactile (plus précisément par le ou les module(s) caméra, comprenant un objectif et un capteur, de la tablette tactile) et/ou comprenant l'un quelconque des modes de réalisation de dispositif selon l'invention venant d'être décrit agencé et/ou programmé pour corriger une image acquise par la tablette tactile (plus précisément par le ou les module(s) caméra, comprenant un objectif et un capteur, de la tablette tactile), et/ou
- une utilisation de l'un quelconque des modes de réalisation de dispositif selon l'invention venant d'être décrit et/ou de l'un quelconque des modes de réalisation de procédé selon l'invention venant d'être décrit au sein d'une tablette tactile, pour corriger une image acquise par la tablette tactile (plus précisément par le ou les module(s) caméra, comprenant un objectif et un capteur, de la tablette tactile), et/ou
- un appareil photographique (de préférence de type reflex ou bridge ou compact), mettant en œuvre l'un quelconque des modes de réalisation de procédé selon l'invention venant d'être décrit pour corriger une image acquise par l'appareil photographique (plus précisément par le ou les module(s) caméra, comprenant un objectif et un capteur, de l'appareil photographique) et/ou comprenant l'un quelconque des modes de réalisation de dispositif selon l'invention venant d'être décrit agencé et/ou programmé pour corriger une image acquise par l'appareil photographique (plus précisément par le ou les module(s) caméra, comprenant un objectif et un capteur, de l'appareil photographique),
- une utilisation de l'un quelconque des modes de réalisation de dispositif selon l'invention venant d'être décrit et/ou de l'un quelconque des modes de réalisation de procédé selon l'invention venant d'être décrit au sein d'un appareil photographique (de préférence de type reflex ou bridge ou compact), pour corriger une image acquise par l'appareil photographique (plus précisément par le ou les module(s) caméra, comprenant un objectif et un capteur, de l'appareil photographique), et/ou
- un véhicule (de préférence automobile, mais pouvant être quelconque), mettant en œuvre l'un quelconque des modes de réalisation de procédé selon l'invention venant d'être décrit pour corriger une image acquise par le véhicule (plus précisément par le ou les module(s) caméra, comprenant un objectif et un capteur, du véhicule) et/ou comprenant l'un quelconque des modes de réalisation de dispositif selon l'invention venant d'être décrit agencé et/ou programmé pour corriger une image acquise par le véhicule (plus précisément par le ou les module(s) caméra, comprenant un objectif et un capteur, du véhicule) ; l'image corrigée étant de préférence utilisée ou destinée à être utilisée par le véhicule pour un pilotage autonome du véhicule, et/ou
- une utilisation de l'un quelconque des modes de réalisation de dispositif selon l'invention venant d'être décrit et/ou de l'un quelconque des modes de réalisation de procédé selon l'invention venant d'être décrit au sein d'un véhicule (de préférence automobile, mais pouvant être quelconque), pour corriger une image acquise par le véhicule (plus précisément par le ou les module(s) caméra, comprenant un objectif et un capteur, du véhicule) ; l'image corrigée étant de préférence utilisée ou destinée à être utilisée par le véhicule pour un pilotage autonome du véhicule, et/ou
- un système de vidéosurveillance (de préférence d'un bâtiment et/ou d'une zone géographique), mettant en œuvre l'un quelconque des modes de réalisation de procédé selon l'invention venant d'être décrit pour corriger une image acquise par le système de vidéosurveillance (plus précisément par le ou les module(s) caméra, comprenant un objectif et un capteur, du **système** de vidéosurveillance) et/ou comprenant l'un quelconque des modes de réalisation de dispositif selon l'invention venant d'être décrit agencé et/ou programmé pour corriger une image acquise par le système de vidéosurveillance (plus précisément par le ou les module(s) caméra, comprenant un objectif et un capteur, du système de vidéosurveillance) , et/ou
- une utilisation de l'un quelconque des modes de réalisation de dispositif selon l'invention venant d'être décrit et/ou de l'un quelconque des modes de réalisation de procédé selon l'invention venant d'être décrit au sein d'un système de vidéosurveillance (de préférence d'un bâtiment et/ou d'une zone géographique), pour corriger une image acquise par le système de vidéosurveillance (plus précisément par le ou les module(s) caméra, comprenant un objectif et un capteur, du système de vidéosurveillance), et/ou
- un drone, mettant en œuvre l'un quelconque des modes de réalisation de procédé selon l'invention venant d'être décrit pour corriger une image acquise par le drone (plus précisément par le ou les module(s) caméra, comprenant un objectif et un capteur, du drone) et/ou comprenant l'un quelconque des modes de réalisation de dispositif selon l'invention venant d'être décrit agencé et/ou programmé pour corriger une image acquise par le drone (plus précisément par le ou les module(s) caméra, comprenant un objectif et un capteur, du drone) ; l'image corrigée étant de préférence utilisée ou destinée à être utilisée par le drone :
   o dans le domaine de l'agriculture, l'image acquise par le drone étant de préférence une image de cultures végétales, et/ou
   o dans le domaine de l'analyse de pollution et/ou de l'occupation des sols, l'image acquise par le drone étant de préférence une image à plusieurs bandes de longueur d'onde, et/ou
- une utilisation de l'un quelconque des modes de réalisation de dispositif selon l'invention venant d'être décrit et/ou de l'un quelconque des modes de réalisation de procédé selon l'invention venant d'être décrit au sein d'un drone, pour corriger une image acquise par le drone (plus précisément par le ou les module(s) caméra, comprenant un objectif et un capteur, du drone) ; l'image corrigée étant de préférence utilisée ou destinée à être utilisée par le drone :
   ∘ dans le domaine de l'agriculture, l'image acquise par le drone étant de préférence une image de cultures végétales, et/ou
   ∘ dans le domaine de l'analyse de pollution et/ou de l'occupation des sols, l'image acquise par le drone étant de préférence une image à plusieurs bandes de longueur d'onde, et/ou
- un satellite, mettant en œuvre l'un quelconque des modes de réalisation de procédé selon l'invention venant d'être décrit pour corriger une image acquise par le satellite (plus précisément par le ou les module(s) caméra, comprenant un objectif et un capteur, du satellite) et/ou comprenant l'un quelconque des modes de réalisation de dispositif selon l'invention venant d'être décrit agencé et/ou programmé pour corriger une image acquise par le satellite (plus précisément par le ou les module(s) caméra, comprenant un objectif et un capteur, du satellite) ; l'image corrigée étant de préférence utilisée ou destinée à être utilisée par le satellite :
   ∘ dans le domaine de l'agriculture, l'image acquise par le satellite étant de préférence une image de cultures végétales, et/ou
   ∘ dans le domaine de l'analyse de pollution et/ou de l'occupation des sols, l'image acquise par le satellite étant de préférence une image à plusieurs bandes de longueur d'onde, et/ou
- une utilisation de l'un quelconque des modes de réalisation de dispositif selon l'invention venant d'être décrit et/ou de l'un quelconque des modes de réalisation de procédé selon l'invention venant d'être décrit au sein d'un satellite, pour corriger une image acquise par le satellite (plus précisément par le ou les module(s) caméra, comprenant un objectif et un capteur, du satellite) ; l'image corrigée étant de préférence utilisée ou destinée à être utilisée par le satellite :
   ∘ dans le domaine de l'agriculture, l'image acquise par le satellite étant de préférence une image de cultures végétales, et/ou
   ∘ dans le domaine de l'analyse de pollution et/ou de l'occupation des sols, l'image acquise par le satellite étant de préférence une image à plusieurs bandes de longueur d'onde, et/ou
- un appareil d'imagerie médicale du corps humain et/ou animal (de préférence par Imagerie par résonance magnétique et/ou par rayon X et/ou par rayons Gamma et/ou par ultrasons), mettant en œuvre l'un quelconque des modes de réalisation de procédé selon l'invention venant d'être décrit pour corriger une image acquise par l'appareil d'imagerie médicale et/ou comprenant l'un quelconque des modes de réalisation de dispositif selon l'invention venant d'être décrit agencé et/ou programmé pour corriger une image acquise par l'appareil d'imagerie médicale, et/ou
- une utilisation de l'un quelconque des modes de réalisation de dispositif selon l'invention venant d'être décrit et/ou de l'un quelconque des modes de réalisation de procédé selon l'invention venant d'être décrit au sein d'un appareil d'imagerie médicale du corps humain et/ou animal (de préférence par Imagerie par résonance magnétique et/ou par rayon X et/ou par rayons Gamma et/ou par ultrasons), pour corriger une image acquise par l'appareil d'imagerie médicale, et/ou
- un appareil de microscopie, mettant en œuvre l'un quelconque des modes de réalisation de procédé selon l'invention venant d'être décrit pour corriger une image acquise par l'appareil de microscopie et/ou comprenant l'un quelconque des modes de réalisation de dispositif selon l'invention venant d'être décrit agencé et/ou programmé pour corriger une image acquise par l'appareil de microscopie, et/ou
- une utilisation de l'un quelconque des modes de réalisation de dispositif selon l'invention venant d'être décrit et/ou de l'un quelconque des modes de réalisation de procédé selon l'invention venant d'être décrit au sein d'un appareil de microscopie, pour corriger une image acquise par l'appareil de microscopie, et/ou
- un appareil d'imagerie par tomographie d'une image acquise dans plusieurs bandes de longueur d'onde (de préférence dans le domaine de la santé et/ou dans le domaine de l'industrie et/ou dans le domaine de l'agriculture), mettant en œuvre l'un quelconque des modes de réalisation de procédé selon l'invention venant d'être décrit pour corriger une image acquise par l'appareil d'imagerie par tomographie et/ou comprenant l'un quelconque des modes de réalisation de dispositif selon l'invention venant d'être décrit agencé et/ou programmé pour corriger une image acquise par l'appareil d'imagerie par tomographie, et/ou
- une utilisation de l'un quelconque des modes de réalisation de dispositif selon l'invention venant d'être décrit et/ou de l'un quelconque des modes de réalisation de procédé selon l'invention venant d'être décrit au sein d'un appareil d'imagerie par tomographie d'une image acquise dans plusieurs bandes de longueur d'onde (de préférence dans le domaine de la santé et/ou dans le domaine de l'industrie et/ou dans le domaine de l'agriculture), pour corriger une image acquise par l'appareil d'imagerie par tomographie, et/ou
- un programme d'ordinateur comprenant des instructions qui, lorsqu'elles sont exécutées par un ordinateur, mettent en œuvre les étapes du procédé selon l'invention venant d'être décrit, et/ou
- un produit programme d'ordinateur comprenant des instructions qui, lorsque le programme est exécuté par un ordinateur, font exécuter par l'ordinateur les étapes du procédé selon l'invention venant d'être décrit, et/ou
- support de stockage lisible par ordinateur comprenant des instructions qui, lorsqu'elles sont exécutées par un ordinateur, amènent l'ordinateur à exécuter les étapes du procédé selon l'invention venant d'être décrit.

Bien sûr, l'invention n'est pas limitée aux exemples qui viennent d'être décrits et de nombreux aménagements peuvent être apportés à ces exemples sans sortir du cadre de l'invention.

En particulier, chaque passage de la description précédente mentionnant un capteur 3, un système optique 4 ou une image d'entrée Iₑ ou un module caméra peut être généralisée respectivement à au moins un capteur 3, au moins un système optique 4 ou au moins une image d'entrée Iₑ ou au moins un module caméra.

Bien entendu, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Procédé de correction d'au moins une image d'entrée Iₑ en une image en cours de restitution I_{Rk} puis une image restituée I_{R} , l'au moins une image d'entrée étant issue d'au moins un capteur optique muni de photosites de différentes couleurs et étant obtenue à travers au moins un système d'imagerie optique, chaque capteur étant associé à un système d'imagerie optique, ledit procédé comprenant :
- une réception de l'au moins une image d'entrée Iₑ,
- une modification itérative de l'image I_{Rk} en cours de restitution à différentes itérations k, par traitement itératif d'une fonction E comprenant deux termes dont :
∘ un premier terme D qui dépend d'une comparaison entre d'une part l'au moins une image d'entrée Iₑ et d'autre part un résultat I_{ck} de l'image I_{Rk} en cours de restitution à l'itération k retraitée par des informations relatives à l'au moins un système d'imagerie, le premier terme D dépendant de différence(s) entre d'une part l'au moins une image d'entrée Iₑ et d'autre part le résultat I_{ck} d'une modification de l'image I_{Rk} en cours de restitution à l'itération k au moins par une fonction décrivant la réponse de l'au moins un système d'imagerie, la fonction décrivant la réponse de l'au moins un système d'imagerie dépendant d'une distance (Z) entre l'au moins un capteur et un objet imagé par l'au moins un capteur, et/ou d'une distance (zₒₛ) entre une partie de l'au moins un système d'imagerie et un objet imagé par l'au moins un capteur, et
∘ un second terme P qui dépend d'anomalie(s) ou pénalité(s) ou défaut(s) au sein de l'image I_{Rk} en cours de restitution à l'itération k,
jusqu'à minimiser, au moins en dessous d'un certain seuil de minimisation ou à partir d'un certain nombre d'itérations, un effet cumulé :
∘ de différence(s) du premier terme D entre l'au moins une image d'entrée Iₑ et le résultat I_{ck}, et
∘ d'anomalie(s) ou pénalité(s) ou défaut(s) dont dépend le second terme P au sein de l'image I_{Rk} en cours de restitution à l'itération k
de sorte que l'image restituée I_{R} corresponde à l'image en cours de restitution à l'itération pour laquelle cette minimisation est obtenue.

2. Procédé selon la revendication 1, **caractérisé en ce qu'**il corrige de manière simultanée au moins deux des types de défauts suivants de l'au moins une image d'entrée parmi :
- Aberration optique, géométrique et/ou chromatique, et/ou
- Distorsion, et/ou
- Mosaïcage, et/ou
- Bruit de détection, et/ou
- Flou, et/ou
- Résidu de non compensation d'un mouvement, et/ou
- Artéfacts induits par une discrétisation spatiale.

3. Procédé selon la revendication 1 ou 2, **caractérisé en ce que** la minimisation de l'effet cumulé correspond à une minimisation de la fonction E.

4. Procédé selon l'une quelconque des revendications précédentes, **caractérisé en ce que** la fonction E comprend la somme du premier terme D et du deuxième terme P.

5. Procédé selon l'une quelconque des revendications précédentes, **caractérisé en ce que** le résultat I_{ck} comprend et/ou consiste en un produit de convolution de l'image I_{Rk} en cours de restitution à l'itération k par la fonction décrivant la réponse de l'au moins un système d'imagerie, et éventuellement traité par une transformation géométrique TG.

6. Procédé selon l'une quelconque des revendications précédentes, **caractérisé en ce que** la fonction décrivant la réponse de l'au moins un système d'imagerie est une fonction de transfert optique (OTF) de l'au moins un système d'imagerie ou une fonction d'étalement du point (PSF) de l'au moins un système d'imagerie.

7. Procédé selon l'une quelconque des revendications précédentes, **caractérisé en ce que** la fonction décrivant la réponse de l'au moins un système d'imagerie dépend :
- d'une distance (z_{co}) entre une partie de l'au moins un système d'imagerie et l'au moins un capteur, et/ou
- d'un état de l'au moins un système d'imagerie, tel qu'un réglage de zoom ou focus ou d'ouverture numérique de l'au moins un système d'imagerie, et/ou
- du pixel de l'image en cours de restitution et/ou du photosite de l'au moins un capteur, et/ou
- d'un ou plusieurs angles entre l'au moins un capteur et l'au moins un système d'imagerie.

8. Procédé selon l'une quelconque des revendications précédentes, **caractérisé en ce qu'**il comprend un passage de lumière à travers l'au moins un système optique jusqu'à l'au moins un capteur de manière à générer l'au moins une image d'entrée.

9. Procédé selon l'une quelconque des revendications précédentes, **caractérisé en ce qu'**il comprend un affichage sur un écran de l'image restituée.

10. Procédé selon l'une quelconque des revendications précédentes, **caractérisé en ce que** l'image restituée a une résolution supérieure ou égale à celle de la réunion de tous les photosites de toutes les couleurs de l'au moins un capteur.

11. Procédé selon l'une quelconque des revendications précédentes, **caractérisé en ce qu'**il comprend une génération, à partir de plusieurs images d'entrée, d'une version initiale de l'image en cours de restitution I_{Rk} pour la première itération k=1 par une combinaison entre ces plusieurs images d'entrée Iₑ.

12. Procédé selon l'une quelconque des revendications précédentes, **caractérisé en ce que** le second terme P comprend au moins une composante P₁ dont l'effet est minimisé pour de faibles écarts d'intensité entre pixels voisins de l'image I_{Rk} en cours de restitution à l'itération k.

13. Procédé selon l'une quelconque des revendications précédentes, **caractérisé en ce que** le second terme P comprend au moins une composante P₃ dont l'effet est minimisé pour de faibles écarts de teinte entre pixels voisins de l'image I_{Rk} en cours de restitution à l'itération k.

14. Procédé selon l'une quelconque des revendications précédentes, **caractérisé en ce que** le second terme P comprend au moins une composante P₂ dont l'effet est minimisé pour de faibles fréquences de changements de direction entre pixels voisins de l'image I_{Rk} dessinant un contour.

15. Dispositif de correction d'au moins une image d'entrée Iₑ en une image en cours de restitution I_{Rk} puis une image restituée I_{R} , l'au moins une image d'entrée étant issue d'au moins un capteur optique muni de photosites de différentes couleurs et étant obtenue à travers au moins un système d'imagerie optique, chaque capteur étant associé à un système d'imagerie optique, ledit dispositif comprenant :
- des moyens (6) pour recevoir l'au moins une image d'entrée Iₑ,
- des moyens de traitement (6) agencés et/ou programmés pour une modification itérative de l'image I_{Rk} en cours de restitution à différentes itérations k, par traitement itératif d'une fonction E comprenant deux termes dont :
∘ un premier terme D qui dépend d'une comparaison entre d'une part l'au moins une image d'entrée Iₑ et d'autre part un résultat I_{ck} de l'image I_{Rk} en cours de restitution à l'itération k retraitée par des informations relatives à l'au moins un système d'imagerie, le premier terme D dépendant de différence(s) entre d'une part l'au moins une image d'entrée Iₑ et d'autre part le résultat I_{ck} d'une modification de l'image I_{Rk} en cours de restitution à l'itération k au moins par une fonction décrivant la réponse de l'au moins un système d'imagerie, la fonction décrivant la réponse de l'au moins un système d'imagerie dépendant d'une distance (Z) entre l'au moins un capteur et un objet imagé par l'au moins un capteur, et/ou d'une distance (zₒₛ) entre une partie de l'au moins un système d'imagerie et un objet imagé par l'au moins un capteur, et
∘ un second terme P qui dépend d'anomalie(s) ou pénalité(s) ou défaut(s) au sein de l'image I_{Rk} en cours de restitution à l'itération k,
jusqu'à minimiser, au moins en dessous d'un certain seuil de minimisation ou à partir d'un certain nombre d'itérations, un effet cumulé :
∘ de différence(s) du premier terme D entre l'au moins une image d'entrée Iₑ et le résultat I_{ck}, et
∘ d'anomalie(s) ou pénalité(s) ou défaut(s) dont dépend le second terme P au sein de l'image I_{Rk} en cours de restitution à l'itération k
de sorte que l'image restituée I_{R} corresponde à l'image en cours de restitution à l'itération pour laquelle cette minimisation est obtenue.

## Patentansprüche

1. Verfahren zum Korrigieren mindestens eines Eingabebildes Iₑ zu einem Bild während einer Wiederherstellung I_{Rk}, dann einem wiederhergestellten Bild I_{R}, wobei das mindestens eine Eingabebild von mindestens einem optischen Sensor stammt, der mit lichtempfindlichen Bereichen unterschiedlicher Farben versehen ist, und durch mindestens ein optisches Abbildungssystem erhalten wird, wobei jeder Sensor einem optischen Abbildungssystem zugeordnet ist, das Verfahren umfassend:
- Empfangen des mindestens einen Eingabebildes Iₑ,
- iteratives Modifizieren des Bildes I_{Rk} während der Wiederherstellung bei unterschiedlichen Iterationen k durch iterative Verarbeitung einer Funktion E, umfassend zwei Terme, darunter:
∘ einen ersten Term D, der von einem Vergleich zwischen einerseits dem mindestens einen Eingabebild Iₑ und andererseits einem Ergebnis I_{ck} des Bildes I_{Rk} während der Wiederherstellung bei der Iteration k abhängt, neu verarbeitet durch Informationen in Bezug auf das mindestens eine Abbildungssystem, wobei der erste Term D von Unterschied(en) zwischen einerseits dem mindestens einen Eingabebild Iₑ und andererseits dem Ergebnis I_{ck} einer Modifikation des Bildes I_{Rk} während der Wiederherstellung bei der Iteration k mindestens durch eine Funktion abhängt, die die Antwort des mindestens einen Abbildungssystems beschreibt, wobei die Funktion, die die Antwort des mindestens einen Abbildungssystems beschreibt, von einer Entfernung (Z) zwischen dem mindestens einen Sensor und einem Objekt, das durch den mindestens einen Sensor abgebildet wird, und/oder von einer Entfernung (zₒₛ) zwischen einem Teil des mindestens einen Abbildungssystems und einem Objekt abhängt, das durch den mindestens einen Sensor abgebildet wird, und
∘ einen zweiten Term P, der von Anomalie(n) oder Strafe(n) oder Fehler(n) innerhalb des Bildes I_{Rk} während der Wiederherstellung bei der Iteration k abhängt,
bis zum Minimieren, mindestens unter einen bestimmten Minimierungsschwellenwert oder ab einer bestimmten Anzahl von Iterationen, eines kumulierten Effekts:
∘ von Unterschied(en) des ersten Terms D zwischen dem mindestens einen Eingabebild Iₑ und dem Ergebnis I_{ck}, und
∘ von Anomalie(n) oder Strafe(n) oder Fehler(n), von denen der zweite Term P innerhalb des Bildes I_{Rk} während der Wiederherstellung bei der Iteration k abhängt
derart, dass das wiederhergestellte Bild I_{R} dem Bild während der Wiederherstellung bei der Iteration entspricht, für die diese Minimierung erhalten wird.

2. Verfahren nach Anspruch 1, **dadurch gekennzeichnet, dass** es gleichzeitig mindestens zwei der folgenden Fehlerarten des mindestens einen Eingabebildes korrigiert aus:
- optischer, geometrischer und/oder chromatischer Aberration, und/oder
- Verzerrung, und/oder
- Mosaikbildung, und/oder
- Detektionsrauschen, und/oder
- Unschärfe, und/oder
- Rest von Nichtkompensation einer Bewegung, und/oder
- Artefakte, die durch eine räumliche Diskretisierung induziert werden.

3. Verfahren nach Anspruch 1 oder 2, **dadurch gekennzeichnet, dass** die Minimierung des kumulierten Effekts einer Minimierung der Funktion E entspricht.

4. Verfahren nach einem der vorstehenden Ansprüche, **dadurch gekennzeichnet, dass** die Funktion E die Summe des ersten Terms D und des zweiten Terms P umfasst.

5. Verfahren nach einem der vorstehenden Ansprüche, **dadurch gekennzeichnet, dass** das Ergebnis I_{ck} ein Faltungsprodukt des Bildes I_{Rk} während der Wiederherstellung bei der Iteration k durch die Funktion umfasst und/oder daraus besteht, die die Antwort des mindestens einen Abbildungssystems beschreibt, und gegebenenfalls durch eine geometrische Transformation TG verarbeitet wird.

6. Verfahren nach einem der vorstehenden Ansprüche, **dadurch gekennzeichnet, dass** die Funktion, die die Antwort des mindestens einen Abbildungssystems beschreibt, eine optische Übertragungsfunktion (OTF) des mindestens einen Abbildungssystems oder eine Punktspreizfunktion (PSF) des mindestens einen Abbildungssystems ist.

7. Verfahren nach einem der vorstehenden Ansprüche, **dadurch gekennzeichnet, dass** die Funktion, die die Antwort des mindestens einen Abbildungssystems beschreibt, abhängt von:
- einem Abstand (z_{co}) zwischen einem Teil des mindestens einen Abbildungssystems und dem mindestens einen Sensor, und/oder
- einem Zustand des mindestens einen Abbildungssystems, wie etwa einer Einstellung von Zoom oder Fokus oder numerischer Apertur des mindestens einen Abbildungssystems, und/oder
- dem Pixel des Bildes während der Wiederherstellung und/oder des lichtempfindlichen Bereiches des mindestens einen Sensors, und/oder
- einem oder mehreren Winkeln zwischen dem mindestens einen Sensor und dem mindestens einen Abbildungssystem.

8. Verfahren nach einem der vorstehenden Ansprüche, **dadurch gekennzeichnet, dass** es einen Lichtdurchgang durch das mindestens eine optische System bis zu dem mindestens einen Sensor umfasst, um das mindestens eine Eingabebild zu erzeugen.

9. Verfahren nach einem der vorstehenden Ansprüche, **dadurch gekennzeichnet, dass** es eine Anzeige des wiederhergestellten Bildes auf einem Bildschirm umfasst.

10. Verfahren nach einem der vorstehenden Ansprüche, **dadurch gekennzeichnet, dass** das wiederhergestellte Bild eine Auflösung aufweist, die größer als oder gleich derjenigen der Vereinigung aller lichtempfindlichen Bereiche aller Farben des mindestens einen Sensors ist.

11. Verfahren nach einem der vorstehenden Ansprüche, **dadurch gekennzeichnet, dass** es ein Erzeugen, aus mehreren Eingabebildern, einer anfänglichen Version des Bildes I_{Rk} während der Wiederherstellung für die erste Iteration k=1 durch eine Kombination dieser mehreren Eingabebilder Iₑ umfasst.

12. Verfahren nach einem der vorstehenden Ansprüche, **dadurch gekennzeichnet, dass** der zweite Term P mindestens eine Komponente P₁ umfasst, deren Wirkung für geringe Intensitätsabweichungen zwischen benachbarten Pixeln des Bildes I_{Rk} während der Wiederherstellung bei der Iteration k minimiert wird.

13. Verfahren nach einem der vorstehenden Ansprüche, **dadurch gekennzeichnet, dass** der zweite Term P mindestens eine Komponente P₃ umfasst, deren Wirkung für geringe Farbtonabweichungen zwischen benachbarten Pixeln des Bildes I_{Rk} während der Wiederherstellung bei der Iteration k minimiert ist.

14. Verfahren nach einem der vorstehenden Ansprüche, **dadurch gekennzeichnet, dass** der zweite Term P mindestens eine Komponente P₂ umfasst, deren Wirkung für geringe Frequenzen von Richtungsänderungen zwischen benachbarten Pixeln des Bildes I_{Rk} minimiert ist, die eine Kontur zeichnen.

15. Vorrichtung zum Korrigieren mindestens eines Eingabebildes Iₑ zu einem Bild während der Wiederherstellung I_{Rk}, dann einem wiederhergestellten Bild I_{R}, wobei das mindestens eine Eingabebild von mindestens einem optischen Sensor stammt, der mit lichtempfindlichen Bereichen unterschiedlicher Farben versehen ist, und durch mindestens ein optisches Abbildungssystem erhalten wird, wobei jeder Sensor einem optischen Abbildungssystem zugeordnet ist, die Vorrichtung umfassend:
- Mittel (6) zum Empfangen des mindestens einen Eingabebildes Iₑ,
- Verarbeitungsmittel (6), die für eine iterative Modifikation des Bildes I_{Rk} während der Wiederherstellung bei unterschiedlichen Iterationen k durch iterative Verarbeitung einer Funktion E eingerichtet und/oder programmiert sind, umfassend zwei Terme, darunter:
∘ einen ersten Term D, der von einem Vergleich zwischen einerseits dem mindestens einen Eingabebild Iₑ und andererseits einem Ergebnis I_{ck} des Bildes I_{Rk} während der Wiederherstellung bei der Iteration k abhängt, neu verarbeitet durch Informationen in Bezug auf das mindestens eine Abbildungssystem, wobei der erste Term D von Unterschied(en) zwischen einerseits dem mindestens einen Eingabebild Iₑ und andererseits dem Ergebnis I_{ck} einer Modifikation des Bildes I_{Rk} während der Wiederherstellung bei der Iteration k mindestens durch eine Funktion abhängt, die die Antwort des mindestens einen Abbildungssystems beschreibt, wobei die Funktion, die die Antwort des mindestens einen Abbildungssystems beschreibt, von einer Entfernung (Z) zwischen dem mindestens einen Sensor und einem Objekt, das durch den mindestens einen Sensor abgebildet wird, und/oder von einer Entfernung (zₒₛ) zwischen einem Teil des mindestens einen Abbildungssystems und einem Objekt abhängt, das durch den mindestens einen Sensor abgebildet wird, und
∘ einen zweiten Term P, der von Anomalie(n) oder Strafe(n) oder Fehler(n) innerhalb des Bildes I_{Rk} während der Wiederherstellung bei der Iteration k abhängt,
bis zum Minimieren, mindestens unter einen bestimmten Minimierungsschwellenwert oder ab einer bestimmten Anzahl von Iterationen, eines kumulierten Effekts:
∘ von Unterschied(en) des ersten Terms D zwischen dem mindestens einen Eingabebild Iₑ und dem Ergebnis I_{ck}, und
∘ von Anomalie(n) oder Strafe(n) oder Fehler(n), von denen der zweite Term P innerhalb des Bildes I_{Rk} während der Wiederherstellung bei der Iteration k abhängt
derart, dass das wiederhergestellte Bild I_{R} dem Bild während der Wiederherstellung bei der Iteration entspricht, für die diese Minimierung erhalten wird.

## Claims

1. A method for correcting at least one input image Iₑ into an image being rendered I_{Rk} and then a rendered image I_{R}, the at least one input image originating from at least one optical sensor provided with photosites of different colors and being obtained through at least one optical imaging system, each sensor being associated with an optical imaging system, said method comprising:
- receiving the at least one input image Iₑ,
- iteratively modifying the image I_{Rk} being rendered at different iterations k by iteratively processing a function E comprising two terms, that is:
∘ a first term D, which depends on a comparison between, on the one hand, the at least one input image Ie and, on the other hand, a result Ick of the image I_{Rk} being rendered at the iteration k reprocessed by information relating to the at least one imaging system, the first term D depending on difference(s) between, on the one hand, the at least one input image Iₑ and, on the other hand, the result Ick of a modification of the image I_{Rk} being rendered at the iteration k at least by a function describing the response of the at least one imaging system, the function describing the response of the at least one imaging system depending on a distance (Z) between the at least one sensor and an object imaged by the at least one sensor, and/or a distance (zₒₛ) between a part of the at least one imaging system and an object imaged by the at least one sensor, and
∘ a second term P, which depends on one or more anomalies or penalties or defects within the image I_{Rk} being rendered at the iteration k,
until minimizing, at least below a certain minimization threshold or after a certain number of iterations, a cumulative effect:
∘ of one or more differences of the first term D between the at least one input image Iₑ and the result I_{ck}, and
∘ of one or more anomalies or penalties or defects on which the second term P depends within the image I_{Rk} being rendered at the iteration k
so that the rendered image I_{R} corresponds to the image being rendered at the iteration for which this minimization is obtained.

2. The method according to claim 1, **characterized in that** it simultaneously corrects at least two of the following types of defect in the at least one input image:
- Optical, geometric and/or chromatic aberration, and/or
- Distortion, and/or
- Mosaicing, and/or
- Detection noise, and/or
- Blurring, and/or
- Residual non-compensation of a movement, and/or
- Artifacts induced by spatial discretization.

3. The method according to claim 1 or 2, **characterized in that** the minimization of the cumulative effect corresponds to a minimization of the function E.

4. The method according to any one of the preceding claims, **characterized in that** the function E comprises the sum of the first term D and the second term P.

5. The method according to any one of the preceding claims, **characterized in that** the result Ick may comprise and/or consist of a convolution product of the image IRk being rendered at the iteration k by the function describing the response of the at least one imaging system, and possibly processed by a geometric transformation GT.

6. The method according to any one of the preceding claims, **characterized in that** the function describing the response of the at least one imaging system is an optical transfer function (OTF) of the at least one imaging system or a point spread function (PSF) of the at least one imaging system.

7. The method according to any one of the preceding claims, **characterized in that** the function describing the response of the at least one imaging system depends on:
- a distance (z_{co}) between a part of the at least one imaging system and the at least one sensor, and/or
- a state of the at least one imaging system, such as a zoom or focus or digital aperture setting of the at least one imaging system, and/or
- the pixel of the image being rendered and/or the photosite of the at least one sensor, and/or
- one or more angles between the at least one sensor and the at least one imaging system.

8. The method according to any one of the preceding claims, **characterized in that** it comprises passing light through the at least one optical system to the at least one sensor so as to generate the at least one input image.

9. The method according to any one of the preceding claims, **characterized in that** it comprises displaying the rendered image on a screen.

10. The method according to any one of the preceding claims, **characterized in that** the rendered image has a resolution greater than or equal to that of the combination of all the photosites of all the colors of the at least one sensor.

11. The method according to any one of the preceding claims, **characterized in that** it comprises generating, from several input images, an initial version of the image being rendered IRk for the first iteration k=1 by a combination between these several input images Ie.

12. The method according to any one of the preceding claims, **characterized in that** the second term P comprises at least one component P1 whose effect is minimized for small intensity differences between neighboring pixels of the image IRk being rendered at the iteration k.

13. The method according to any one of the preceding claims, **characterized in that** the second term P comprises at least one component P3 whose effect is minimized for small differences in hue between neighboring pixels of the image being rendered IRk at the iteration k.

14. The method according to any one of the preceding claims, **characterized in that** the second term P comprises at least one component P2 whose effect is minimized for low frequencies of direction changes between neighboring pixels of the image IRk drawing a contour.

15. A device for correcting at least one input image Iₑ into an image being rendered I_{Rk} and then a rendered image I_{R} , the at least one input image originating from at least one optical sensor provided with photosites of different colors and being obtained through at least one optical imaging system, each sensor being associated with an optical imaging system, said device comprising:
- means (6) for receiving the at least one input image Iₑ,
- processing means (6) arranged and/or programmed for iteratively modifying the image I_{Rk} being rendered at different iterations k by iteratively processing a function E comprising two terms, that is:
∘ a first term D, which depends on a comparison between, on the one hand, the at least one input image Ie and, on the other hand, a result Ick of the image I_{Rk} being rendered at the iteration k reprocessed by information relating to the at least one imaging system, the first term D depending on difference(s) between, on the one hand, the at least one input image Iₑ and, on the other hand, the result Ick of a modification of the image I_{Rk} being rendered at the iteration k at least by a function describing the response of the at least one imaging system, the function describing the response of the at least one imaging system depending on a distance (Z) between the at least one sensor and an object imaged by the at least one sensor, and/or a distance (zₒₛ) between a part of the at least one imaging system and an object imaged by the at least one sensor, and
∘ a second term P, which depends on one or more anomalies or penalties or defects within the image I_{Rk} being rendered at the iteration k,
until minimizing, at least below a certain minimization threshold or after a certain number of iterations, a cumulative effect:
∘ of one or more differences of the first term D between the at least one input image Iₑ and the result I_{ck}, and
∘ of one or more anomalies or penalties or defects on which the second term P depends within the image I_{Rk} being rendered at the iteration k
so that the rendered image I_{R} corresponds to the image being rendered at the iteration for which this minimization is obtained.
